# NEUE EUROPÄISCHE PATENTSCHRIFT

(11) **EP 3 746 322 B2**
(45) Veröffentlichungstag und Bekanntmachung des Hinweises auf die Entscheidung über den Einspruch: **21.01.2026**
(45) Hinweis auf die Patenterteilung: 16.11.2022
(21) Anmeldenummer: 19706885.1
(22) Anmeldetag: 29.01.2019
(51) Int. Cl.: B60K 1/00, B60K 11/02

(54) **THERMOMANAGEMENTMODUL ZUR HANDHABUNG VON FLUIDEN SOWIE VERFAHREN ZUR HERSTELLUNG DERSELBEN**
THERMOMANAGEMENTMODULE FOR MANAGING FLUIDS, AND METHOD FOR THE PRODUCTION THEREOF
MODULE DE THERMOMANAGEMENT DE MANIPULATION DE FLUIDES ET PROCÉDÉ DE FABRICATION DUDIT MODULE DE THERMOMANAGEMENT

(30) Priorität: 29.01.2018 DE 202018100479 U; 05.02.2018 DE 102018102542
(43) Veröffentlichungstag der Anmeldung: 09.12.2020
(73) Patentinhaber: WOCO Industrietechnik GmbH, 63628 Bad Soden-Salmünster (DE); Dr. Ing. h.c. F. Porsche AG, 70435 Stuttgart (DE)
(72) Erfinder: WOLF, Anton, 63571 Gelnhausen (DE); MICHAELIS, Florian, 36391 Sinntal Jossa (DE); GEHRING, Martin, 71404 Korb (DE); GARCIA LAZARO, David, 70736 Fellbach (DE)
(74) Vertreter: Busse & Busse
(86) Internationale Anmeldenummer: PCT/EP2019/052142
(87) Internationale Veröffentlichungsnummer: WO 2019/145575

(56) Entgegenhaltungen:
- WO-A2-2013/004935
- WO-A2-2013/004935
- WO-A2-2017/223232
- DE-A1- 102012 211 431
- DE-A1- 102012 211 431
- US-A1- 2016 355 100
- US-A1- 2016 355 100
- US-A1- 2016 368 373
- US-A1- 2016 368 373
- US-B2- 9 540 055
- US-B2- 9 540 055

## Beschreibung

Die vorliegende Erfindung betrifft ein Thermomanagementmodul zur Handhabung zumindest eines Fluids innerhalb eines Fahrzeugs.

Aus dem Stand der Technik sind Vorrichtungen für Fahrzeuge mit Brennkraftmaschinen in Form von Systemen, wie z.B. aus US 2016/368373 bekannt, die zum Thermomanagement eingesetzt werden, bekannt. In diesen Modulen wird ein Kühlmedium, wie Kühlwasser, eingesetzt. Bei Fahrzeugen mit Brennkraftmaschine sind diese Systeme allerdings vergleichsweise einfach und im Allgemeinen dezentral aufgebaut. Der für diese Systeme vorhandene Bauraum ist ausreichend, um die Fluidhandhabungselemente, wie Steuerelemente, beispielsweise Ventile, Pumpen und Sensoren, aufzunehmen.

Bei modernen Fahrzeugen, die einen Elektroantrieb, insbesondere als zusätzliche Antriebsquelle in Hybridfahrzeugen, umfassen ist hingegen die Problematik, dass der zur Verfügung stehende Bauraum aufgrund des Volumens, der von Energiespeichern und weiteren Elementen, wie Elektromoren und Steuerelektronik, eingenommen werden im Vergleich zu entsprechenden Elementen in Fahrzeugen, die ausschließlich einen Verbrennungsmotor aufweisen, verringert ist. Gleichzeitig ist aber die Anzahl von zu kühlenden Wärmequelle, wie Energiespeicher und Elektromotoren als auch Steuerelektronik und Wechselrichter und dergleichen, erhöht, wodurch die Komplexität des Thermomanagementsystems zunimmt, was grundsätzlich aufgrund der erhöhten Anzahl von Fluidhandhabungselementen zu einem exponentiell ansteigenden benötigten Bauraum führt. So steigt die Anzahl der notwendigen Fluidhandhabungselemente zur Verbindung der Kreisläufe untereinander nicht linear mit der Anzahl der Kreisläufe, sondern exponentiell. Auch nimmt das Gewicht des Systems aufgrund der erhöhten Anzahl von Verschlauchungen zu. Somit ist für solche Systeme derzeit ein erhöhter Bauraum und ein höheres Gesamtgewicht notwendig, was sich negativ auf den Verbrauch der Fahrzeuge auswirkt. Auch führen solche komplexen Systeme zu einer deutlichen Verlangsamung im Herstellungsprozess des Fahrzeugs. So ist bei der Produktion von dem Monteur auf die richtige Verbindung der Vielzahl von Verschlauchungen mit den jeweiligen Komponenten und Fluidhandhabungselementen zu achten sowie die Dichtheit der Verbindungen zu prüfen. Dies verringert die Taktrate im Herstellungsprozess.

Es ist daher Aufgabe der vorliegenden Erfindung, die aus dem Stand der Technik bekannten Vorrichtungen derartig weiterzuentwickeln, dass die Nachteile des Stands der Technik überwunden werden, insbesondere der für die Vorrichtung notwendige Bauraum und das Gesamtgewicht reduziert wird und gleichzeitig der Herstellungsprozess des Fahrzeugs, insbesondere Hybridfahrzeugs und/oder batteriebetriebenen Fahrzeugs (Battery Electric Verhicle (BEV)) bei gleichzeitiger Steigerung der Ausfallsicherheit vereinfacht wird .

Diese Aufgabe wird erfindungsgemäß gelöst durch ein Thermomanagementmodul zur Handhabung zumindest eines Fluids innerhalb eines Fahrzeugs, insbesondere eines zumindest teilweise elektrisch angetriebenen Fahrzeugs, mit den Merkmalen des Patentanspruchs 1.

Mit der Erfindung wird ferner vorgeschlagen, dass eine Vielzahl von Fluidhandhabungselementen vorhanden ist.

Auch ist bevorzugt, dass das Thermomanagementmodul zumindest ein, vorzugsweise eine Vielzahl, von dritten Verteilelementen umfasst, wobei das bzw. die dritten Verteilelemente insbesondere parallel zu dem ersten Verteilelement und/oder dem zweiten Verteilelement angeordnet ist bzw. sind und/oder das Fluidhandhabungselement und/oder zumindest eines der Fluidhandhabungselemente umfasst bzw. umfassen.

Ferner kann ein erfindungsgemäßes Thermomanagementmodul dadurch gekennzeichnet sein, dass das Fluidhandhabungselement und/oder zumindest eines der Fluidhandhabungselemente zumindest eine Durchbrechung, zumindest einen Anschlussstutzen, insbesondere in Form zumindest eines Zulaufs und/oder Abgangs, zumindest ein Ventil, zumindest eine Pumpe, zumindest einen Kanal, zumindest einen Sensor und/oder zumindest ein Dichtungselement umfasst.

Bei dem vorgenannten Thermomanagementmodul ist insbesondere bevorzugt, dass das Fluidhandhabungselement und/oder zumindest eines der Fluidhandhabungselemente vollständig von dem ersten Verteilelement, dem zweiten Verteilelement und/oder dem dritten Verteilelement umfasst ist, zumindest ein Teil des Fluidhandhabungselementes und/oder zumindest eines der Fluidhandhabungselemente integral, vorzugsweise als 2K-Komponente in dem ersten Verteilelement, dem zweiten Verteilelement und/oder dem dritten Verteilelement ausgebildet ist, insbesondere in Form zumindest einer Vertiefung und/oder zumindest einer Kammer, wie zumindest einer Ventilkammer, zumindest einer Pumpkammer, zumindest eines Kanalsegments, wie einer Kanalteilschale, insbesondere Kanalhalbschale, zumindest einer Sensierkammer und/oder zumindest einer Probenkammer und/oder das Fluidhandhabungselement zumindest ein mit dem ersten Verteilelement, dem zweiten Verteilelement und/oder dem dritten Verteilelement in Verbindung bringbares, insbesondere zumindest bereichsweise in der Vertiefung und/oder der Kammer aufnehmbares und/oder anordbares Hilfselement, wie einen Ventilaktuator, einen Pumpaktuator, ein Ventilglied, ein Pumpelement, einen Sensor, wie einen Temperatursensor, einen pH-Sensor, einen Drucksensor und/oder Strömungssensor umfasst.

Weiterhin wird vorgeschlagen, dass zumindest ein Bereich des Hilfselements akustisch entkoppelt und/oder akustisch gedämpft von dem ersten Verteilelement, dem zweiten Verteilelement und/oder dem dritten Verteilelement ist, vorzugsweise unter Zwischenschaltung zumindest eines akustischen ersten Dämpfungselements an dem ersten Verteilelement, dem zweiten Verteilelement, und/oder dem dritten Verteilelement gelagert ist. Bei der vorgenannten Ausführungsform ist besonders bevorzugt, dass das Hilfselement zumindest zweiteilig aufgebaut ist, wobei insbesondere der erste Teil akustisch entkoppelt und/oder akustisch gedämpft von dem ersten Verteilelement, dem zweiten Verteilelement und/oder dem dritten Verteilelement gelagert ist, während vorzugsweise der zweite Teil zumindest indirekt akustisch ungedämpft mit dem ersten Verteilelement, dem zweiten Verteilelement und/oder dem dritten Verteilelement verbunden ist.

Auch wird vorgeschlagen, dass der erste Teil zumindest einen Antrieb, zumindest einen Aktuator und/oder zumindest eine Auswerteeinheit und/oder Wandlereinheit eines Sensors, insbesondere zur Umwandlung eines mittels einer Sensiereinheit des Sensors erfassten Sensiersignals in ein von dem Sensor ausgegebenes Messsignal umfasst.

Erfindungsgemäß können die beiden vorgenannten Ausbildungen dadurch gekennzeichnet sein, dass der zweite Teil zumindest ein, vorzugsweise durch den ersten Teil, insbesondere den Antrieb und/oder den Aktuator angetriebenes Glied, wie ein Pumpglied und/oder ein Ventilglied und/oder zumindest eine mit der Auswerteeinheit und/oder Wandlereinheit wechselwirkende Sensiereinheit des Sensors umfasst.

Auch ist erfindungsgemäß bevorzugt, dass mittels zumindest einer Kupplungsvorrichtung eine Kraft, vorzugsweise eine translatorische Kraft und/oder ein Drehmoment, von zumindest einem Bereich des ersten Teils auf zumindest einen Bereich des zweiten Teils und/oder zumindest teilweise das Sensiersignal übertragbar ist, insbesondere mittels elektromagnetischer, magnetischer, elastisch mechanischer, direkter mechanischer, indirekter und/oder optischer Kopplung .

Hierbei wird vorgeschlagen, dass die Kupplungsvorrichtung zumindest einen Magneten und/oder zumindest ein zweites Dämpfungselement umfasst und/oder die Kupplungsvorrichtung zumindest bereichsweise durchlässig für das von dem Thermomanagementmodul gehandhabte Fluid ist, insbesondere zur Leitung des Fluids von dem zweiten Teil zu dem ersten Teil oder von dem ersten Teil zu dem zweiten Teil, beispielsweise zur Erwärmung und/oder Kühlung des ersten Teils, ausgebildet ist, beispielsweise zumindest bereichsweise eine Hohlwelle und/oder Fluidleitung umfasst und/oder als Hohlwelle ausgebildet ist.

Ferner kann ein erfindungsgemäßes Thermomanagementmodul dadurch gekennzeichnet sein, dass das erste Dämpfungselement und/oder das zweite Dämpfungselement zumindest ein elastisches Element, wie eine Feder und/oder ein Gummielement umfasst.

Dabei wird auch vorgeschlagen, dass zumindest ein Fluidhandhabungselement, vorzugsweise zumindest Fluidkanal, zumindest eine Ventilkammer, zumindest eine Pumpkammer zumindest teilweise durch eine Kombination des ersten Verteilelementes und des zweiten Verteilelementes, des zweiten Verteilelementes und des dritten Verteilelementes, des ersten Verteilelementes und des dritten Verteilelementes und/oder eines ersten dritten Verteilelementes und eines zweiten dritten Verteilelementes gebildet ist.

Ein erfindungsgemäßes Thermomanagementmodul kann dadurch gekennzeichnet sein, dass das erste Verteilelement und das zweite Verteilelement, das erste Verteilelement und das dritte Verteilelement, das zweite Verteilelement und das dritte Verteilelement und/oder zumindest zwei dritte Verteilelemente mittels zumindest einer ersten Verbindungsvorrichtung, vorzugsweise nicht zerstörungsfrei lösbar, miteinander verbunden sind.

Auch wird bevorzugt, dass zumindest ein Hilfselement zumindest bereichsweise mittels zumindest einer zweiten Verbindungseinrichtung mit dem ersten Verteilelement, dem zweiten Verteilelement und/oder dem dritten Verteilelement verbunden ist.

Bei den beiden vorgenannten Ausführungsformen wird erfindungsgemäß vorgeschlagen, dass die erste Verbindungseinrichtung und/oder die zweite Verbindungseinrichtung zumindest eine Schweißverbindung, zumindest eine Adhäsionsverbindung, zumindest eine Schraubverbindung, zumindest einer Rastverbindung und/oder zumindest einer Klipsverbindung umfasst bzw. umfassen.

Bei den beiden vorgenannten Ausführungsformen ist bevorzugt, dass mittels einer ersten zweiten Verbindungsvorrichtung der erste Teil des Hilfsmittels verbunden ist und mittels zumindest einer zweiten Verbindungsvorrichtung zumindest der zweite Teil des Hilfsmittels verbunden ist.

Hierbei wird vorgeschlagen, dass die erste zweite Verbindungsvorrichtung zumindest bereichsweise das erste Dämpfungselement umfasst.

Auch kann ein erfindungsgemäßes Thermomanagementmodul sich dadurch auszeichnen, dass das erste Verteilelement, das zweite Verteilelement und/oder das dritte Verteilelement zumindest bereichsweise ein thermoplastisches Material, ein duroplastisches Material, ein Verbundmaterial, vorzugsweise thermoplastisches und duroplastisches Verbundmaterial, zumindest ein Polypropylenmaterial und/oder zumindest ein Polyamidmaterial umfasst.

Schließlich wird für das erfindungsgemäße Thermomanagementmodul vorgeschlagen, dass das Fluid zumindest ein Liquid, wie eine Kühlflüssigkeit, insbesondere umfassend Wasser, beispielweise destilliertes Wasser, umfasst.

Weiterhin liefert die Erfindung ein Verfahren zur Herstellung eines Thermomanagementmoduls zur Handhabung zumindest eines Fluids, insbesondere eines erfindungsgemäßen

Thermomanagementmoduls, mit den Merkmalen des Anspruchs 12.

Bei diesem Verfahren ist besonders bevorzugt, dass das Verfahren ferner die Bereitstellung zumindest eines dritten, im wesentlichen plattenförmigen Verteilelementes, vorzugsweise einer Vielzahl von dritten Verteilelementen umfasst, wobei vorzugsweise zumindest ein drittes Verteilelement mittels der ersten Verbindungseinrichtung mit dem ersten Verteilelement, dem zweiten Verteilelement und/oder zumindest einem weiteren dritten Verteilelement verbunden wird.

Auch wird für das Verfahren vorgeschlagen, dass der Schritt der Bereitstellung des ersten Verteilelementes, der Schritt der Bereitstellung des zweiten Verteilelementes und/oder der Schritt der Bereitstellung des dritten Verteilelementes die Herstellung des ersten, zweiten und/oder dritten Verteilelementes in zumindest einem Auf-/Zu Werkzeug umfasst, insbesondere mittels Spritzgießen.

Weiterhin kann vorgesehen sein, dass der Schritt der Bereitstellung des ersten Verteilelementes, der Schritt der Bereitstellung des zweiten Verteilelementes und/oder der Schritt der Bereitstellung des dritten Verteilelementes die zumindest teilweise Ausbildung zumindest eines Fluidhandhabungselementes in dem ersten, zweiten und/oder dritten Verteilelementes, insbesondere in einem 2K-Verfahren umfasst.

Der Erfindung liegt somit die überraschende Erkenntnis zugrunde, dass es möglich ist, die für ein Thermomanagement in einem Fahrzeug, insbesondere Hybridfahrzeug und/oder BEV, notwendigen Funktionen in eines erfindungsgemäßen

Thermomanagementmoduls, das auch als Ventilblock bezeichnet werden kann, vereint werden kann. Dieses Modul übernimmt sämtliche Kühl- und Heizfunktionen der Antriebskomponenten in dem Fahrzeug, u.a. E-Maschine, HV-Batterie, Leistungselektronik und Innenraumerwärmung. Dabei bietet das erfindungsgemäße Thermomanagementmodul den Vorteil, dass der für das Thermomanagement notwendige Bauraum deutlich reduziert werden kann und im Vergleich zu aus dem Stand der Technik bekannten Systemen, bei denen bis zu 40 Schläuche am Produktionsband des Fahrzeugs richtig verbunden werden müssen, lediglich ein Modul in das Fahrzeug eingebaut und lediglich mit einer geringeren Anzahl von Schläuchen verbunden werden muss. So wird es möglich, dass die Taktzeiten bei der Herstellung des Fahrzeugs eingehalten werden können, indem eine hohe Funktionsintegration in ein mit allen Komponenten ausgestattetes Modul, welches als dichtheitsgeprüftes Bauteil am Produktionsband des Fahrzeugs bereitgestellt wird, erreicht werden kann.

Da das erfindungsgemäße Thermomanagementmodul als Kunststoffmodul ausgebildet werden kann, wird auch das Bauteilgewicht reduziert und gleichzeitig die Variabilität gesteigert, da die Verwendung von Kunststoffmaterialien eine Veränderung der Bauteilgeometrie durch einfache Anpassung der wenig komplexen Werkzeuge ermöglicht. Hierbei wirkt sich positiv aus, dass die Vorrichtung in sich modular aufgebaut ist.

Hieraus ergeben sich manigfaltige Möglichkeiten der Verschaltung von Fluidhandhabungselementen und der Führung des Fluids in dem Modul von einem Eingang bzw. Zulauf zu einem Ausgang bzw. Abgang bzw. von Fluidhandhabungselement zu Fluidhandhabungselement. So bildet jedes der Verteilelemente eine Schicht bzw. Ebene, in der das Fluid in verschiedenen Kanälen in der jeweiligen Ebene geführt werden kann. Durch die Verbindung der einzelnen Ebenen ist es aber beispielsweise auch möglich, dass das Fluid von einer Ebene in eine benachbarte Ebene geführt werden kann, um dort von einer ersten Stelle der ersten Ebene zu einer anderen Stelle der ersten Ebene geführt und dort wieder in die erste Ebene eingespeist werden kann. Ferner können in der weiteren Ebene weitere Fluidhandhabungselemente, wie Pumpen oder Ventile sowie Abgänge oder Zuläufe vorhanden sein. Auch können Kanäle im Verbindungsbereich von Ebenen ausgebildet werden, wobei die Kanäle durch in den Oberflächen der benachbarten Ebenen bzw. Verteilelementen ausgebildete Vertiefungen geformt sein können. Durch Kombination eines ersten Verteilelementes mit unterschiedlichen weiteren Verteilelementen kann dann der Kanalquerschnitt beliebig angepasst werden, indem die Querschnittsform der Vertiefung in dem weiteren Verteilelement variiert wird. Auch können durch den modularen Aufbau die Anordnung der Anschlusselemente an die Richtung, aus der die Verschlauchungen des Fahrzeugs angeschlossen werden müssen, angepasst werden. Das jeweilige Verteilelement kann so angepasst sein, dass es Anschlüsse an einer Stirn- und/oder an einer Hauptseite ausweist.

Unter einer plattenförmigen Ausformung der Verteilelemente wird verstanden, dass die Ausdehnung des Verteilelementes in einer Ebene, in der es mit einem weiteren Verteilelement verbunden ist, größer ist, als die Ausdehnung in einer Richtung senkrecht zu dieser Ebene. Die plattenförmige Ausbildung der Verteilelemente bietet den Vorteil, dass die Kontaktfläche zwischen den Verteilelementen maximiert ist und so eine bestmögliche Verbindung und damit Abdichtung zwischen diesen erreicht wird. Ferner wird durch diese Maximierung erreicht, dass eine größtmögliche Fläche für Schnittstellen zur Übertragung des Fluids von einer Ebene in die andere Ebene bereitgestellt wird und so eine größtmögliche Modularität erreicht werden kann.

Ähnlich einem Mikrochip, bei dem Schaltkreise in mehreren Ebenen angeordnet werden, lässt sich die Funktionalität des erfindungsgemäßen Thermomanagementmodul nahezu beliebig erweitern, indem die Anzahl der parallel, also schichtweise zueinander angeordneten Verteilelemente erhöht wird, also die Anzahl von Schichten bzw. Ebenen erhöht wird. Dadurch wird es möglich ein Thermomanagement auch für Fahrzeuge bereitzustellen, bei denen die Anzahl der mit Fluid zu kühlenden bzw. zu erwärmenden Komponenten erhöht ist, indem zusätzliche Ebenen hinzugefügt werden.

Die Modularität des Thermomanagementmoduls wird auch dadurch gesteigert, dass die einzelnen Fluidhandhabungselemente nur teilweise durch die Verteilelemente gebildet werden und erst durch Kombination mit Hilfselementen ausgebildet werden. Dies ermöglicht es, dass ein und derselbe Bereich eines Verteilelements, der ein jeweiliges Fluidhandhabungselement teilweise ausbildet, je nach Bedarf und Anforderungen mit unterschiedlichen Hilfselementen kombiniert werden kann und so bedarfsgerecht Fluidhandhabungselemente mit unterschiedlichen Charakteristiken, wie Schaltgeschwindigkeiten von Ventilen, Pumpleistungen von Pumpen oder Beständigkeit gegen unterschiedliche Temperaturen, ausgebildet werden können.

Insbesondere eine zweigeteilte Ausbildung von Hilfselementen ermöglicht es ferner, dass die akustischen Eigenschaften des Thermomanagement Systems bzw. -Moduls verbessert werden können. So können die einzelnen Teile in akustischer und/oder mechanischer Weise entkoppelt werden und es kann verhindert werden, dass es zu einer Körperschallübertragung von Schwingungen von einem Antrieb oder Aktuator auf den die Verteilelemente umfassenden Hauptkörper kommt. Dieser würde ansonsten dazu führen, dass der Hauptkörper als Resonator wirkt und es so zu einer Verstärkung des Körperschalls kommt.

Gleichzeitig wird aber auch die Funktionalität des Fluidhandhabungselementes sichergestellt. Aufgrund der teilweisen Anordnung des Hilfselementes innerhalb des ersten Verteilelementes, des zweiten Verteilelementes und/oder des dritten Verteilelementes bzw. des zumindest teilweisen Hindurchreichen des Hilfselementes durch das erste Verteilelement, das zweite Verteilelement und/oder das dritte Verteilelement ist es für dessen Funktionalität wichtig, dass die entsprechenden Spaltmasse eingehalten werden. Beispielsweise im Falle eines Ventils oder einer Pumpe als Hilfselement muss sichergestellt sein, dass ein von einem Antrieb oder einem Aktuator zu dem Ventil- oder Pumpenglied verlaufendes Übertragungselement, wie eine Welle, ausreichenden Abstand zu dem jeweiligen Verteilelement hat, um ein Schleifen oder dergleichen zu vermeiden. Im Falle einer Lagerung der Welle an dem jeweiligen Verteilelement müssen ferner Überbeanspruchungen der Lager vermieden werden.

Auch muss sichergestellt werden, dass das Ventil- bzw. Pumpglied eine definierte Lage innerhalb der jeweiligen, in dem jeweiligen Verteilelement ausgebildeten Pumpkammer bzw. Ventilkammer ausweist, um die gewünschte Pumpleistung bzw. Ventilfunktion sicherzustellen. So müssen insbesondere in einem Ventil die entsprechenden Spaltmasse um das Ventilglied eingehalten werden, um eine Abdichtung zu erreichen.

Würde nun das gesamte Hilfselement zusammen mit dem Übertragungselement und dem jeweiligen Ventil- bzw. Pumpglied akustisch entkoppelt, beispielsweise mittels einer elastischen Lagerung, insbesondere unter Einsatz des ersten Dämpfungselementes, an dem jeweiligen Verteilelement gelagert, würden die entsprechenden Spaltmasse nicht eingehalten und die Funktionalität nicht sichergestellt werden können.

Durch die zweiteilige Ausführung des Hilfselement wird es nun möglich, den den Körperschall erzeugenden Teil des Hilfselementes, wie den Antrieb der Pumpe bzw. den Aktuator des Ventils, akustisch entkoppelt von dem jeweiligen Verteilelement, an dem es befestigt ist, zu lagern, ohne die Funktionalität des Hilfselements negativ zu beeinflussen.

So wird die Funktionalität des Hilfselements dadurch sichergestellt, dass der zweite Teil des Hilfselementes ungedämpft an dem jeweiligen Verteilelement befestigt wird und so eine definierte Position des zweiten Teil des Hilfselementes relativ zu dem Verteilelement sichergestellt ist, insbesondere unter Einhaltung der gewünschten Spaltmasse.

Um eine Übertragung von Bewegungen und Kräften, wie Drehmomenten von dem ersten Teil auf den zweiten Teil, insbesondere von einem Antrieb bzw. Aktuator des Hilfselementes an ein Ventil- oder Pumpglied des Hilfselementes, sicherzustellen, ohne jedoch eine akustische Brücke herzustellen, ist eine Verbindung über eine Kupplungsvorrichtung vorgesehen. Diese ermöglicht insbesondere eine berührungslose Kraftübertragung, beispielsweise über eine magnetische Wechselwirkung, oder eine gedämpfte Übertragung, beispielsweise über das zweite Dämpfungselement, so dass sichergestellt ist, dass der Hauptkörper nicht als Resonator oder Verstärker für den durch den Antrieb oder den Aktuator erzeugten Körperschall dient.

Die berührungslose Kraftübertragung kann beispielsweise dadurch erfolgen, dass der Antrieb einen ersten Magneten bewegt, der benachbart allerdings beabstandet zu einem Ende des Übertragungselementes angeordnet ist. Im Bereich des Endes des Übertagungselementes ist ein weiterer Magnet oder ein durch den ersten Magneten beinflussbares Element angeordnet, so dass das Übertragungselement der Bewegung des ersten Magneten folgt.

Bei der zweiteiligen Ausbildung des Hilfselementes ist es also trotz einer akustischen Entkopplung weiterhin möglich eine direkte, insbesondere mechanisch elastische, und/oder indirekte mechanische Kopplung zwischen den Teilen herzustellen. Darüber hinaus sind aber auch weitere Kopplungsarten zwischen den Teilen des Hilfselements möglich. So können die Teile mechanisch entkoppelt sein aber weiterhin eine Signalübertragung zwischen diesen möglich sein. So kann der zweite Teil ein Sensierelement umfassen und das von dem Sensierelement erzeugte Signal kann berührungslos, beispielsweise elektromagnetisch oder optisch, an den ersten Teil, in dem das Sensiersignal in ein Messsignal für eine nachfolgende Auswertung umgewandelt wird, übertragen werden. Auch kann die Umwandlung bereits im zweiten Teil erfolgen und dann das Messsignal an das erste Teil übertragen werden. Unabhängig von der Entkopplung zwischen ersten und zweitem Teil kann auch eine anders geartete Übertragung zwischen dem ersten Teil und dem zweiten Teil erfolgen. So kann die Kopplungsvorrichtung auch eine Übertragung von dem Thermomanagementmodul gehandhabten, insbesondere in den Verteilelementen geführten, Fluids zwischen den Teilen ermöglichen. Vorstellbar ist beispielweise, dass die Kopplungsvorrichtung eine Fluidleitung und/oder eine Hohlwelle umfasst. Durch diese ist es dann möglich, Fluid von dem zweiten Teil in den ersten Teil, insbesondere für Kühl- oder Heizzwecke zu transportieren. So kann der erste Teil einen zu kühlenden oder zu erwärmenden Antrieb, insbesondere Pump- und/oder Ventilantrieb umfassen und über den zweiten Teil, wie ein Pumpglied, Pumprad, Pumprotor und/oder Ventilglied kann das Fluid an das erste Teil geleitet werden. Nach dem Durchlaufen des ersten Teils kann das Fluid dann über eine weitere Leitung in der Kopplungsvorrichtung oder aber eine externe, von dem Hilfselement zu einem Fluidhandhabungselement, wie einem Zulauf geführt und wieder dem jeweiligen Verteilelement zugeführt werden. Diese Übertragung von Fluid kann auch dann erreicht werden, wenn die Teile des Hilfselementes und/oder die Kopplungsvorrichtung zumindest funktional getrennt aber ansonsten zumindest bereichsweise einstückig ausgebildet sind.

Die Verwendung der Kunststoffmaterialien bietet ferner den Vorteil, dass die Verteilelemente auf unterschiedlichste Weise miteinander mediendicht verbunden werden können. So können diese je nach Anforderung miteinander verschweißt, verklebt oder verschraubt werden. Hierbei ist besonders vorteilhaft, dass etwaig notwendige Dichtelemente direkt bei der Herstellung der Verteilelemente integriert werden können, beispielweise in einem 2K-Prozess. Unter einem 2K-Prozess wird im Sinne dieser Erfindung verstanden, dass in einem Arbeitsschritt mehrere Kunststoffmaterialkomponenten miteinander verarbeitet, insbesondere verbunden werden. Beispielweise ist dies mittels eines Spritzgußverfahrens möglich.

In einer beispielhaften Ausführung des erfindungsgemäßen Thermomanagementmoduls ist das wenigstens eine Fluidhandhabungselement eine Pumpe mit einem im Wesentlichen zylinderförmigen Pumpengehäuse, das einen Gehäusemantel und zwei gegenüberliegende, den Gehäusemantel abschließende Gehäusestimwände umfasst. Die Pumpe kann beispielsweise mittels einer im Wesentlichen kreisförmigen Gehäusestirnwand eben auf einem der Verteilelemente angeordnet sein. Beispielsweise besitzt das Verteilelement eine im Wesentlichen komplementär zu dem Pumpengehäuse geformte Mulde, in die die Pumpe einzusetzen ist. Gemäß einer weiteren beispielhaften Ausführung ist die Pumpe liegend auf dem Verteilelement angeordnet. Dies bedeutet, dass die Pumpe mittels dem Gehäusemantel auf dem Verteilelement aufliegt. Es kann vorgesehen sein, dass an der Oberfläche des Verteilelements eine teilkreisförmige Mulde zum Aufnehmen wenigstens eines Teils des zylinderförmigen Gehäusemantels ausgebildet ist. Die Befestigung der Pumpe an dem Verteilelement kann beispielsweise mittels einer Schelle erfolgen. Diese kann die Pumpe wenigstens teilweise umfänglich umgreifen und an dem Verteilelement befestigt, vorzugsweise verschraubt, verklebt oder formschlüssig montiert, insbesondere verrastet, werden.

Gemäß einer Weiterbildung der vorliegenden Erfindung kann vorgesehen sein, dass sämtliche Fluidführungskanäle und Fluidhandhabungselemente in derselben Ebene liegen, insbesondere in der Verbindungsebene der wenigstens zwei Verteilelemente, vorzugsweise in der Schweißebene. Wie bereits oben erläutert wurde, kann es beispielsweise aus Platzgründen notwendig sein, mehrere Ebenen zur Fluidführung und Fluidhandhabung bereitzustellen, um eine effiziente Verteilung des Fluids zu gewährleisten.

Erfindungsgemäß ist das wenigstens eine Fluidhandhabungselement ein Kältemittel-Kühlmittel-Wärmeübertrager, der sogenannte Chiller. Dieser wird an ein Verteilelement mittels eines U-förmigen Profils aus Kunststoff gekoppelt. Die Kopplung erfolgt formschlüssig, wie durch Verrasten, durch Verschrauben oder stoffschlüssig, wie durch Verkleben oder Verschweißen.

Gemäß einer beispielhaften Weiterbildung kann der wenigstens eine Anschlussstutzen, insbesondere wenigstens ein Zulauf und/oder ein wenigstens ein Abgang, zum Verbinden mit einer entsprechenden Komponente, wie einem Fluidhandhabungselement, derart ausgebildet sein, dass eine Montagerichtung und/oder Orientierung bei der Kopplung mit der weiteren Komponente vorbestimmt ist. Beispielsweise weist der Anschlussstutzen eine Kopplungseinrichtung, wie ein weibliches Kopplungsteil, auf, die dazu ausgebildet ist mit einer entsprechenden Kopplungseinrichtung, wie einem männlichen Kopplungsteil, welches an der zu koppelnden weiteren Komponente anzubringen ist, in einen Eingriff zu gelangen, oder umgekehrt, wobei die Kopplungseinrichtung des Anschlussstutzens eine vorbestimmte Montagerichtung und/oder Orientierung festlegt, in welcher die Komponente koppelbar ist. Insbesondere sind die Kopplungsteile von Anschlussstutzen und Komponenten vorzugsweise nur in der vorbestimmten Montagerichtung und/oder Orientierung zueinander miteinander in Eingriff bringbar. Für den Fall, dass mehrere Anschlussstutzen für mehrere Komponenten an den Verteilelementen angeordnet sind, können die Kopplungsteile derart gestaltet sein, dass eine eindeutige Zuordnung der aneinander zu befestigenden Kopplungsteile möglich ist, also ein entsprechendes Kopplungsteil-Paar eindeutig bestimmbar ist. Insbesondere lässt sich dadurch das Risiko einer Fehlmontage erheblich verringern, vorzuweise vermeiden.

Zusammenfassend liefert die Erfindung also ein Thermomanagementmodul zur Handhabung eines Fluids und er wird ein Verfahren zur Herstellung dieser beschrieben, bei der das Thermomanagementmodul als Thermomanagementmodul eingesetzt werden kann, und zwar auch in konventionellen, ausschließlich mit einer Brennkraftmaschine angetriebenen Fahrzeugen und nicht nur bei Hybrid- oder Elektrofahrzeugen, bei denen das Modul eine höchste Funktionsintegration und eine Minimierung der Verschlauchung aufweist. Weiterhin wird ein Package Vorteil erzielt, also der Bauraum minimiert und eine größtmöglich Anpassungsfähigkeit und Flexibilität durch einen modularen Aufbau erreicht. Insbesondere führt dies zu einem Kostenbenefit sowohl bei der Herstellung des Thermomanagementmoduls also auch bei der Herstellung des Fahrzeugs, in dem das Thermomanagementmodul eingesetzt wird, so dass die Taktrate gesteigert werden kann, da anstelle von Einzelkomponenten ein Zusammenbauteil (ZSB) in dem Fahrzeug verbaut werden kann. Weitere Merkmale und Vorteile der Erfindung ergeben sich aus der nachfolgenden Beschreibung, in der bevorzugte Ausführungsformen der Erfindung anhand von schematischen Zeichnungen erläutert werden.

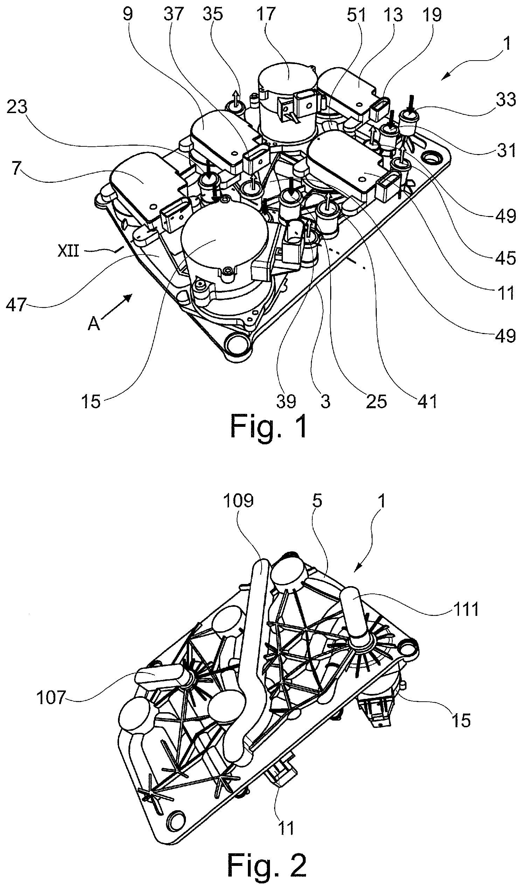

Dabei zeigt:
Figur 1 eine perspektivische Aufsicht auf eine Oberseite eines Thermomanagementmoduls;
Figur 2 eine perspektivische Aufsicht auf die Unterseite des Thermomanagementmoduls der Figur 1;
Figur 3 eine perspektivische Aufsicht auf das Thermomanagementmodul der Figuren 1 und 2 aus Richtung A in Figur 1;
Figur 4 eine perspektivische Aufsicht auf ein erstes Verteilelement des Thermomanagementmoduls der Figuren 1 bis 3 vor einer Verbindung mit einem zweiten Verteilelement;
Figur 5 eine perspektivische Aufsicht auf ein zweites Verteilelement des Thermomanagementmoduls der Figuren 1 bis 3;
Figuren 6a
   bis 6d verschiedene Stadien der Verbindung der in den Figuren 1 bis 5 dargestellten Verteilelemente mit entsprechenden Hilfselementen;

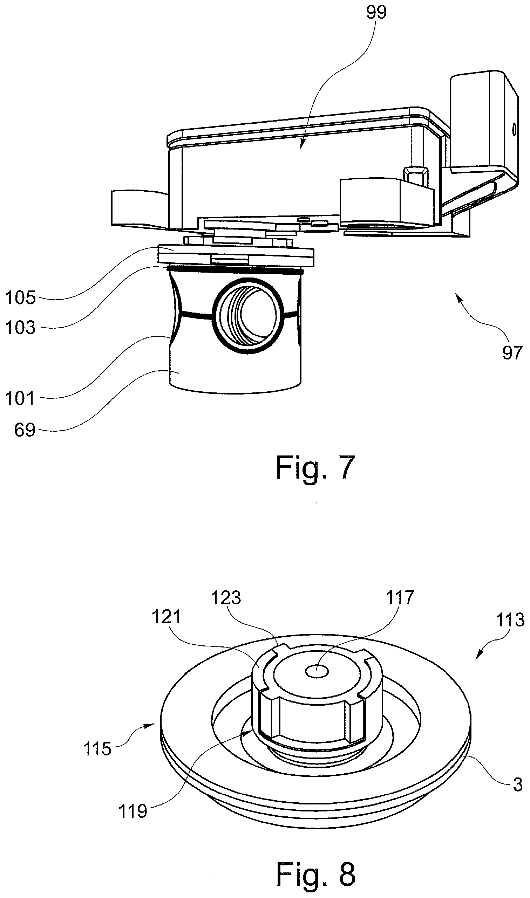

Figur 7 eine perspektivische Aufsicht auf ein Hilfselement in Form einer Ventilkomponente;
Figur 8 eine perspektivische Aufsicht auf einen zweiten Teil eines zweiteilig aufgebauten Hilfselementes;

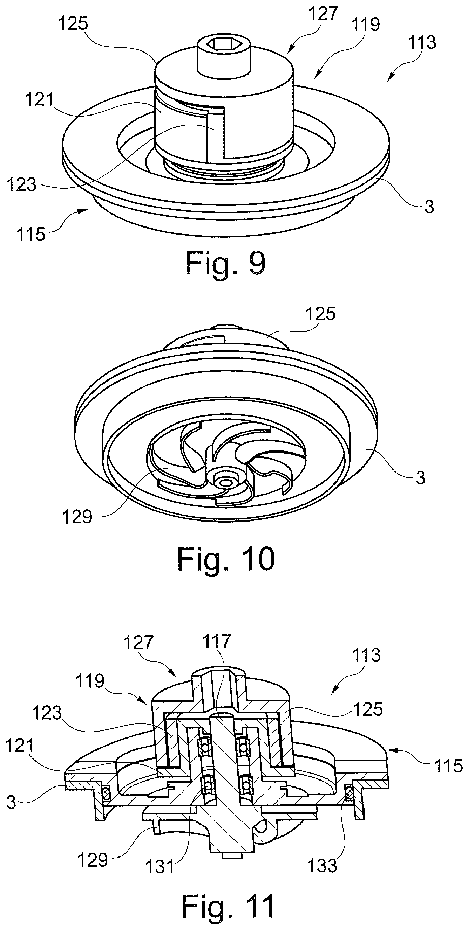

Figur 9 eine perspektivische Aufsicht auf das Hilfselement der Figur 8 mit einem teilweise dargestellten ersten Teil des Hilfselementes;
Figur 10 eine perspektivische Unteransicht des Hilfselementes der Figuren 8 und 9,
Figur 11 eine Querschnittsansicht des Hilfselements der Figuren 8 bis 10;

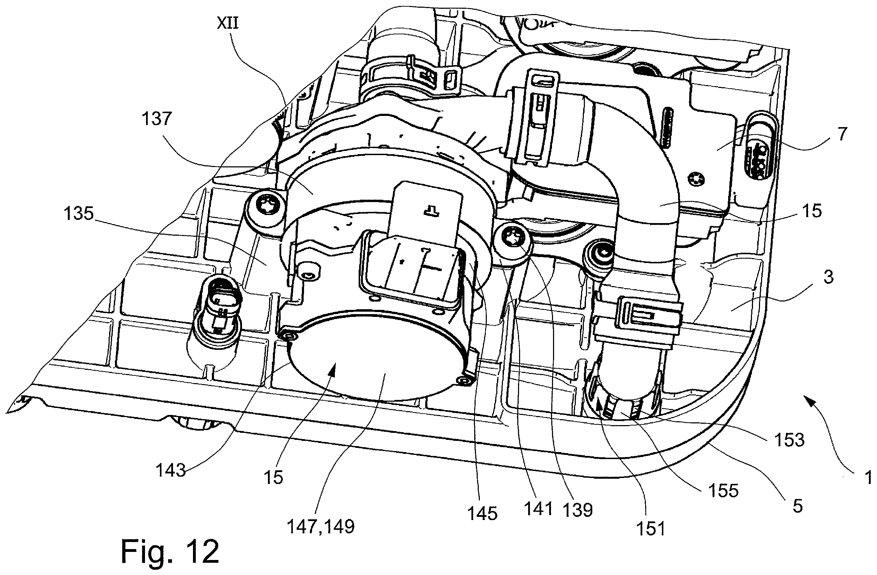

Figur 12 eine perspektivische Ansicht auf einen Ausschnitt einer Oberseite eines Thermomanagementmoduls gemäß einer weiteren beispielhaften Ausführung;

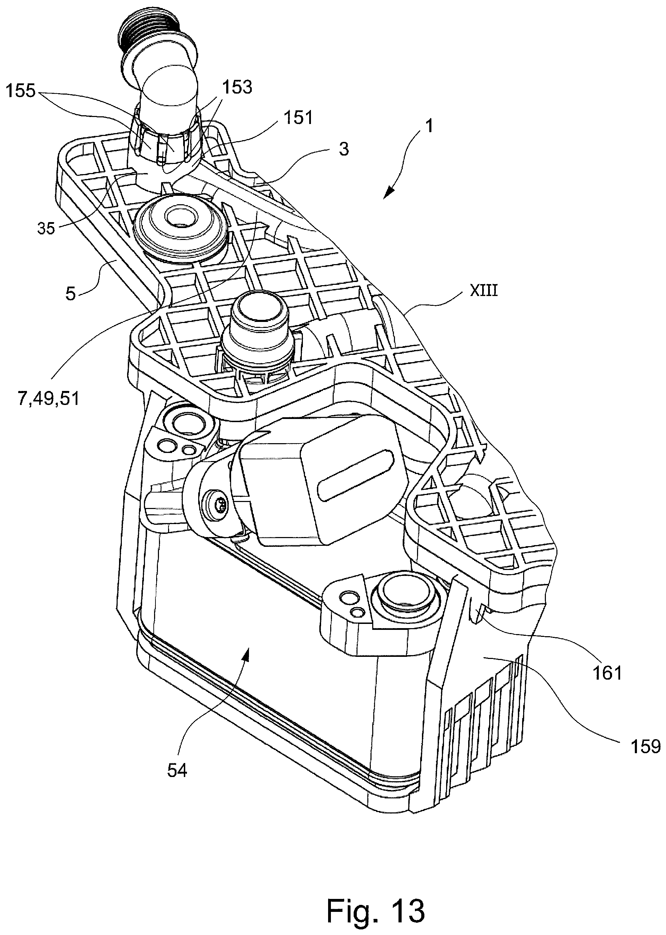

Figur 13 eine perspektivische Ansicht auf einen Ausschnitt einer Oberseite einer erfindungsgemäßen Thermomanagementmoduls; und

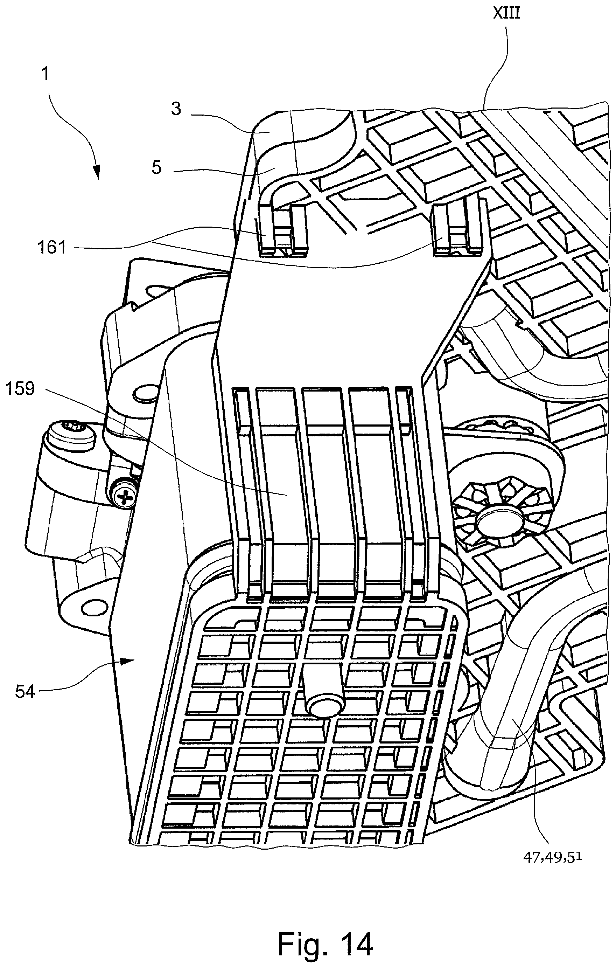

Figur 14 eine perspektivische Ansicht auf einen Ausschnitt einer Unterseite des erfindungsgemäßen Thermomanagementmoduls nach Figur 13

In den Figuren 1 bis 3 sind verschiedene perspektivische Ansichten auf ein Thermomanagementmodul für das Thermomangagement eines Elektrofahrzeugs dargestellt.

Das Modul 1 umfasst in diesem Beispiel ein erstes Verteilelement 3 und ein zweites Verteilelement 5. Das Modul 1 umfasst ferner eine Vielzahl von Fluidhandhabungselementen in Form von nachfolgend genauer erläuterten elektromotorischen Ventilen 7, 9, 11 und 13, Pumpen 15, 17, Sensoren 19, 21, Zuläufen 23, 25, 27, 29, 31, 33, Abgängen 35, 37, 39, 41, 43, 45 sowie Kanälen zum Führen des Fluids zwischen den Zuläufen, Abgängen, Ventilen, Pumpen, Sensoren als auch zwischen den Verteilelementen bzw. durch diese hindurch, wobei lediglich beispielhaft die Kanäle 47, 49 und 51 mit Bezugszeichen versehen sind.

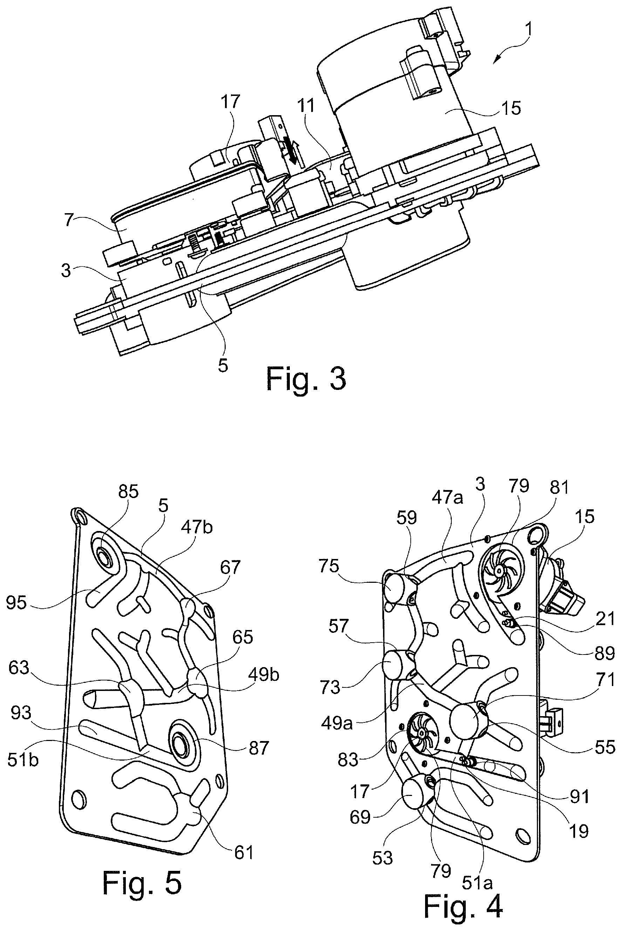

Wie insbesondere einem Vergleich der Figuren 1 und 2 einerseits und der Figur 3 andererseits zu entnehmen ist, sind die Verteilelementes 3 und 5 plattenförmig ausgebildet und parallel zueinander angeordnet. Die Verbindung der Verteilelemente 3,5 erfolgt dabei mittels einer ersten Verbindungsvorrichtung, insbesondere Verschweißen, der in einem Spritzgießverfahren aus Polypropylen hergestellten Verteilelementes 3,5.

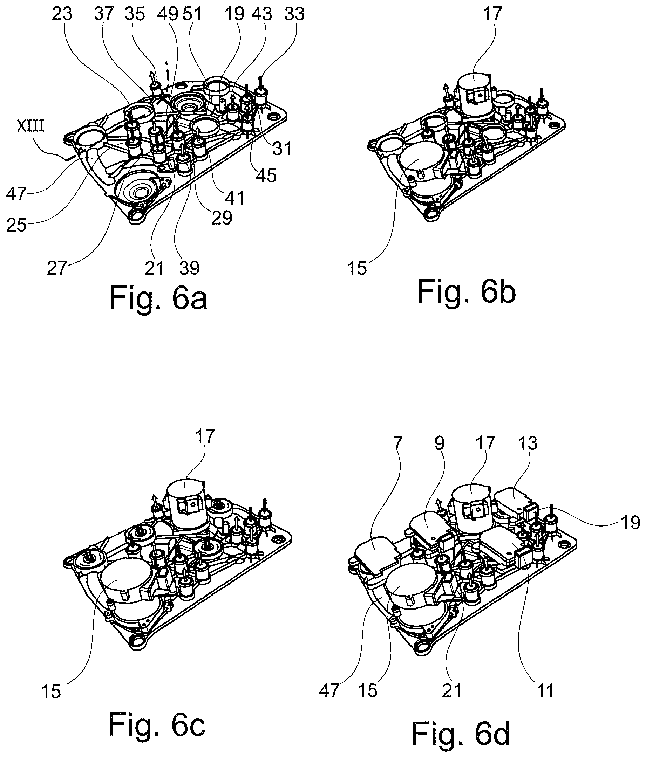

In Figur 4 ist das Verteilelement 3 vor seiner Verbindung mit dem Verteilelement 5, das in Figur 5 dargestellt ist, gezeigt. In Figur 4 ist ferner dargestellt, dass verschiedene, nachfolgend näher erläuterte Hilfselemente bereits an dem Verteilelement angeordnet sind. Wie später anhand der Figuren 6a bis 6d erläutert wird, können diese Hilfselemente auch nach einer Verbindung der Verteilelemente 3 und 5 mit diesen verbunden werden.

In den Figuren 1, 3, 4 und 5 ist erkennbar, dass ein Teil der Fluidhandhabungselemente integral in dem Verteilelement 3 ausgebildet sind. Hierbei handelt es sich insbesondere um die Zuläufe 23 bis 33 sowie die Abgänge 35 bis 45.

Weitere Fluidhandhabungselemente sind teilweise integral in dem Verteilelement 3 und dem Verteilelement 5 ausgebildet und werden bei der Verbindung der Verteilelemente 3 und 5 vollständig ausgebildet. Hierbei handelt es sich insbesondere um die Kanäle 47 bis 51. Diese werden dadurch gebildet, dass in den Verteilelementen jeweils Kanalhalbschalen 47a und 47b, 49a und 49b bzw. 51a und 51b ausgebildet werden, die sich beim Zusammenfügen der Verteilelemente 3 und 5 zu Kanälen komplettieren. In bevorzugten, nicht dargestellten Ausführungsformen sind im Bereich der Kanalhalbschalen Dichtungselemente im 2K-Verfahren bei der Herstellung der Verteilelemente 3 und 5 ausgebildet worden.

Schließich weißt das Modul 1 Fluidhandhabungselemente auf, die nur teilweise in den Verteilelementen 3 und 5 ausgebildet sind und erst durch Hilfselemente, die mit den Verteilelementen 3 und 5 verbunden werden bzw. teilweise durch diese hindurchgeführt und/oder in diese eingeführt werden, komplettiert werden. Hierbei handelt es sich insbesondere um die Ventile 7 bis 13, die Pumpen 15, 17 sowie die Sensoren 19, 21.

So umfassen die Ventile 7 bis 13 Durchbrechungen 53, 55, 57, 59, die in dem Verteilelement 3 ausgebildet sind, sowie Ventilkammern 61, 63, 65, 67, die in dem Verteilelement 5 ausgebildet sind. Wie insbesondere der Figur 4 zu entnehmen ist und später anhand der der Figuren 6a bis 6d erläutert werden wird, wird ein Ventilglied 69, 71, 73, 75 eines Hilfselementes durch die jeweilige Durchbrechung 53 bis 59 in die jeweilige Ventilkammer 61 bis 67 eingeführt und das Hilfselement schließlich mittels einer zweiten Verbindungsvorrichtung, insbesondere Verschraubung oder Verklipsung mit den Verteilelementen 3 und/oder 5 verbunden. Auf diese Weise wird das jeweilige Ventil 7 bis 13 ausgebildet.

In ähnlicher Weise werden die Pumpen 15, 17 ausgebildet. Hierzu wird ein Pumpelement, wie ein Rotor 77, 79 eines weiteren Hilfselementes in eine jeweilige Durchbrechung 81, 83 in dem Verteilelement 3 eingeführt. Durch Verbindung des Hilfselementes mit dem Verteilelement 3 bzw. 5, mittels der zweiten Verbindungsvorrichtung, beispielsweise Verschrauben, entsteht dann in Kombination bzw. Wechselwirkung mit in dem Verteilelement 5 ausgebildeten Pumpkammern 85, 87 jeweils die jeweilige Pumpe 15, 17.

Die jeweiligen Sensoren, insbesondere Temperatursensoren bzw. pH- Sensoren werden durch Kombination von in dem Verteilelement 3 ausgebildeten Durchbrechungen 89, 91 und in dem Verteilelement 5 ausgebildete Sensierkammem 93, 95 ausgebildet.

In Figur 7 ist eine perspektivische Aufsicht auf ein Hilfselement 97 zur Ausbildung des Ventils 13 dargestellt. Das Hilfselement 97 umfasst einen elektrischen Steller bzw. (Ventil-)Aktuator bzw. Antrieb 99, mittels dem das Ventilglied 69 drehbar ist. Wie Figur 7 ferner zu entnehmen ist, sind in das Ventilglied 69 Dichtungselemente 101, 103 integriert, um eine Abdichtung in der Ventilkammer 61 zu erreichen. Weiterhin umfasst das Hilfselement 97 ein Verbindungselement 105, welches die Verbindung mit dem Verteilelement 3 mittels einer Rastverbindung ermöglicht. Wie zuvor erläutert, kann eine Verbindung zwischen dem Antrieb 99 und dem Ventilglied 69 so ausgebildet sein, dass über eine Hohlwelle Fluid von dem Ventilglied 69 an den Antrieb 99 geführt wird, um diesen zu kühlen. Nach der Kühlung wird das Fluid über eine nicht dargestellte Fluidleitung wieder in das jeweilige Verteilelement 3, insbesondere mittels einer der Zuläufe 23, 25, 27, 29, 31, 33, geführt. Auch eine umgekehrte Führung, also durch einen der Abgänge 35, 37, 39, 41, 43, 45 über eine nicht dargestellte Leitung zum dem Antrieb 99 und von diesem über die Hohlwelle an das Ventilglied 69 ist möglich. Weiterhin ist diese Leitung von Kühl- und/oder Heizfluiden auch auf andere Hilfselemente als Ventile, wie Pumpen oder dergleichen, übertragen werden.

Der Zusammenbau des Moduls 1 wird nun anhand der Figuren 6a bis 6d beschrieben. Wie Figur 6a zu entnehmen ist, werden zunächst die Verteilelemente 3 und 5 bereitgestellt und mittels Schweißen bzw. Verkleben miteinander verbunden. In einem nächsten Schritt, der in Figur 6b dargestellt ist, werden Hilfselemente zur Ausbildung der Pumpen 15, 17 an dem Verteilelement 3 befestigt sowie die Sensoren 19, 21 in die Sensierkammern 93, 95 eingeführt und mit den Verteilelementen verbunden. In einem nächsten Schritt, der in Figur 6c dargestellt ist, werden die Ventilglieder 69 bis 75 in den Ventilkammern 61 bis 67 mittels Verrastung befestigt und in einem anschließenden Schritt, der in Figur 6d dargestellt ist, die Aktuatoren der Ventile 7 bis 13 mit den Ventilgliedern 69 bis 75 verbunden.

Das so hergestellte Modul kann dann als ZSB in das Fahrzeug eingebaut werden und es müssen dann lediglich die jeweiligen Zuläufe 23 bis 33 und Abgänge 35 bis 45 mit den im Fahrzeug vorhandenen Verschlauchungen verbunden werden. Beispielsweise wird der Abgang 39 mit einem Kühlkreislauf, in dem das Fluid mittels der Pumpe 15 umgewälzt wird, verbunden. In diesem Beispiel wird der Abgang 41 mit einem Kühler verbunden während der Zulauf 33 mit einem Wärmetauscher verbunden wird.

Wie insbesondere Figur 2 zu entnehmen ist, ist der Aufbau des Moduls 1 nicht auf die zuvor durch die Verteilelemente 3 und 5 gebildeten zwei Ebenen bzw. Schichten beschränkt. Auf der dem Verteilelement 3 abgewandten Seite des Verteilelementes 5 sind Abdeckungen 107, 109, 111 angeordnet. Es ist ohne weiteres möglich, diese Abdeckungen zu entfernen und so die darunter befindlichen Fluidhandhabungselemente, die in diesem Beispiel als Kanäle bzw. Pumpkammern ausgebildet sind, zu öffnen, um den Anschluss eines dritten Verteilelementes, vorzugsweise einer Vielzahl von dritten Verteilelementen zu ermöglichen und so weitere Ebenen bzw. Schichten zu ergänzen, um die Funktionalität und Komplexität des Moduls 1 zu erweitern.

In Figur 8 bis 11 sind Ansichten einer bevorzugten Ausführungsform eines (zweiteiligen) Hilfselementes in Form einer Pumpe 113 dargestellt.

In Figur 8 ist eine perspektivische Aufsicht auf einen zweiten Teil 115 der Pumpe 113 dargestellt. Wie Figur 8 zu entnehmen ist, ist der zweite Teil 115 über eine Rastverbindung, die eine zweite zweite Verbindungsvorrichtung darstellt, mit dem ersten Verteilelement 3, das nur abschnittsweise dargestellt ist, verbunden. In Figur 8 ist dargestellt, dass eine Welle 117, die, wie später erläutert, den Antrieb der Pumpe mit einem Pumpglied in Form eines Rotors verbindet, einen Bereich einer Kupplungsvorrichtung 119 aufweist. Die Kupplungsvorrichtung 119 weist ein klauenförmiges erstes Kupplungselement 121 sowie ein als zweites Dämpfungselement wirkendes gummielastisches Federelement 123 auf.

In Figur 9, die eine weitere perspektivische Aufsicht auf die Pumpe 113 darstellt, ist gezeigt, wie das erste Kupplungselement 121 mit einem zweiten Kupplungselement 125 der Kupplungsvorrichtung 119 wechselwirkt. Das zweite Kupplungselement ist komplementär zu dem ersten Kupplungselement 121 und Federelement 123 ausgebildet. Diese komplementäre, ebenfalls klauenförmige Form bewirkt, dass das zweite Kupplungselement 125 drehmitnahmesicher in das erste Kupplungselement 121 eingreift, es allerdings aufgrund der Anordnung des Federelementes 123 zwischen den Kupplungselementen 121 und 125 zu keinem direkten Kontakt kommt. Die beiden Kupplungselemente sind somit elastisch mechanisch miteinander verbunden, womit eine Kraftübertragung sichergestellt ist, gleichzeitig aber die Ausbildung einer akustischen Brücke vermieden ist. Mit anderen Worten liegt eine akustische Entkopplung zwischen diesen vor. Damit ist sichergestellt, dass von einem in den Figuren 8 bis 11 nicht dargestellten Antrieb der Pumpe 113, ähnlich dem Antrieb 99, erzeugter Körperschall nicht mittels der Kupplungsvorrichtung 119 von dem ersten Teil 127 auf den zweiten Teil 115 übertragen wird. Aufgrund der direkten Befestigung des zweiten Teils 115 an dem Verteilelement 3 ist aber gleichzeitig sichergestellt, dass die definierten Spaltmasse eingehalten werden. Der erste Teil 127 der Pumpe umfasst einen mit dem Kupplungselement 125 wechselwirkenden Antrieb, der mittels eines nicht dargestellten ersten Dämpfungselements akustisch entkoppelt mit dem Verteilelement 3 verbunden ist, womit eine direkte Schallbrücke auf das Verteilelement 3 verhindert wird.

In Figur 10 ist eine perspektivische Unteransicht eines Teils der Pumpe 113 dargestellt. Wie Figur 10 zu entnehmen ist, ist die Welle 117 bzw. das Kupplungselement 121 mit dem Rotor 129 verbunden. Durch die direkte Befestigung des zweiten Teils 115 an dem Verteilelement 3 ist der Rotor in einer definierten Lage relativ zu dem ersten Verteilelement 3, durch den er hindurchreicht, bzw. relativ zu einer in den Figuren 8 bis 11 nicht dargestellten, in dem zweiten Verteilelement 5 ausgebildeten Pumpkammer angeordnet.

In Figur 11 ist eine Querschnittsansicht eines Teils des Hilfselementes in Form der Pumpe 113 dargestellt. Der zweite Teil 115 ist über eine Rastverbindung mit dem ersten Verteilelement 3 verbunden und mittels Dichtungen 133 ist die Durchbrechung in dem ersten Verteilelement 3 und damit die daran anschließende Pumpenkammer abgedichtet. Figur 10 ist ferner zu entnehmen, dass die Welle 117 mittels Lagern 131 gelagert ist. Die Verwendung der Kupplungsvorrichtung 119 führt dazu, dass weniger Schwingungen auf die Welle 117 übertragen werden und so eine Körperschallübertragung über die Lager 131 bzw. eine Überbeanspruchung der Lager 131 vermieden wird.

In Figur 12 ist eine perspektivische Ansicht eines Ausschnitts (gemäß der Linie XII in Figur 1) einer Oberseite einer weiteren beispielhaften Ausführung des Thermomanagementmoduls 1 dargestellt. Die folgende Beschreibung beschränkt sich auf die sich im Vergleich zu den vorhergehenden beispielhaften Ausführungen ergebenden wesentlichen Unterschiede. Das Verteilelement 3 umfasst eine an seiner Oberfläche ausgebildete, insbesondere teilkreisförmige Vertiefung 135, wie eine Mulde, zum Aufnehmen wenigstens eines Teils der Pumpe 15. Die Pumpe 15 umfasst ein im Wesentlichen zylinderförmiges Pumpengehäuse 143, das einen Gehäusemantel 145 und zwei gegenüberliegende, den Gehäusemantel 145 abschließende Gehäusestimwände 147, 149 umfasst. Gemäß der in Figur 12 dargestellten Ausführung ist die Pumpe 15, anders als bei den zuvor gezeigten Ausführungen, in denen die Pumpe 15 im Wesentlichen stehend, d. h. mit einer der Gehäusestirnwände auf 147, 149 auf dem Verteilelement 3 angebracht ist, liegend auf dem Verteilelement 3 angeordnet. Die Pumpe 15 liegt mittels des Gehäusemantels 145 auf dem Verteilelement 3 und insbesondere auf der teilkreisförmigen Vertiefung 135. Die Befestigung der Pumpe 15 an dem Verteilelement 3 ist gemäß Figur 12 mittels einer Schelle 137 realisiert. Die Schelle 137 umgreift die Pumpe 15 wenigstens teilweise umfänglich und ist an dem Verteilelement 3 befestigt, vorzugsweise mittels einer Verschraubung 139. Um die Verschraubung 139 zu realisieren, weist die Schelle 137 wenigstens eine Befestigungslasche 141, vorzugsweise zwei Befestigungslaschen 141, auf.

Ferner ist in Figur 12 ersichtlich, dass ein Anschlussstutzen 151, der beispielsweise ein Zulauf 23, 25, 27, 29, 31, 33 oder ein Abgang 35, 37, 39, 41, 43, 45 sein kann, zum Verbinden mit einer entsprechenden Komponente, einem Fluidhandhabungselement, beispielsweise einem Schlauch 157, derart ausgebildet sein, dass eine Montagerichtung und/oder Orientierung bei der Kopplung mit der weiteren Komponente vorbestimmt ist. Beispielsweise weist der Anschlussstutzen 151 eine Kopplungseinrichtung, wie ein weibliches Kopplungsteil 153, auf, die dazu ausgebildet ist mit einer entsprechenden Kopplungseinrichtung, wie einem männlichen Kopplungsteil, welches an der zu koppelnden weiteren Komponente anzubringen ist, in einen Eingriff zu gelangen, oder umgekehrt, wobei die Kopplungseinrichtung des Anschlussstutzens 151 eine vorbestimmte Montagerichtung und/oder Orientierung festlegt, in welcher die Komponente koppelbar ist. Insbesondere sind die Kopplungsteile 153, 155 von Anschlussstutzen und Komponente vorzugsweise nur in der vorbestimmten Montagerichtung und/oder Orientierung zueinander miteinander in Eingriff bringbar. Für den Fall, dass mehrere Anschlussstutzen 151 für mehrere Komponenten an den Verteilelementen 3, 5 angeordnet sind, können die Kopplungsteile derart gestaltet sein, dass eine eindeutige Zuordnung der aneinander zu befestigenden Kopplungsteile 153, 155 Kopplungsteile möglich ist, also ein entsprechendes Kopplungsteil-Paar eindeutig bestimmbar ist. Insbesondere lässt sich dadurch das Risiko einer Fehlmontage erheblich verringern, vorzuweise vermeiden. Beispielsweise ist das weibliche Kopplungsteil 153 als Vertiefung realisiert und das männliche Kopplungsteil 155 als Erhebung. Beim anschließenden einer weiteren Komponente, die eine entsprechende Befestigungseinrichtung besitzt, greifen entsprechende männliche Kopplungsteile in die weiblichen Kopplungsteile 153 und entsprechende weibliche Kopplungsteile in die männlichen Kopplungsteile 155 ein.

In Figur 13 und Fig. 14 ist das erfindungsgemäße Thermomanagementmodul 1 dargestellt, wobei Figur 13 eine perspektivische Ansicht eines Ausschnitts (gemäß der Linie XIII in Fig. 6a) einer Oberseite des Thermomanagementmoduls 1 und Figur 14 eine perspektivische Ansicht eines Ausschnitts (gemäß der Linie XIII in 6a) einer Unterseite des Thermomanagementmoduls 1 zeigt. Erfindungsgemäß ist wenigstens ein Fluidhandhabungselement ein Kältemittel-Kühlmittel-Wärmeübertrager 154, der sogenannte Chiller. Dieser ist an das Verteilelement 5 mittels eines U-förmigen Profils 159 aus Kunststoff gekoppelt. Die Kopplung erfolgt formschlüssig, wie durch Verrasten, durch Verschrauben oder stoffschlüssig, wie durch Verkleben oder Verschweißen. Das Befestigungsprofil 159 kann verteilelementseitig wenigstens ein Verrastungsteil (nicht dargestellt) aufweisen, das dazu eingerichtet ist, mit einem diesem zugeordneten Verrastungsteil 161 des Verteilelements 5 in einen Eingriff zu gelangen, um den Kältemittel-Kühlmittel-Wärmeübertrager 154 mittels des Befestigungsprofils 159 an dem Verteilelement 5 zu befestigen.

In der perspektivischen unter Ansicht auf das Thermomanagementmodul 1, insbesondere das Verteilelement 5, gemäß Figur 14 ist vor allem die Befestigung des Kältemittel-Kühlmittel-Wärmeübertragers 154 und das Verteilelement 5 näher dargestellt. An einer Unterseite des Verteilelements 5 sind paarweise angeordnete Verrastungsteile 161 vorgesehen, wobei nur ein Verrastungsteil-Paar 161 ersichtlich ist. Mit je einem Verrastungsteil-Paar 161 kann ein entsprechendes, diesem zugeordnetes Verrastungsteil-Paar (nicht dargestellt) des Befestigungsprofils 159 in Eingriff gelangen, um den Kältemittel-Kühlmittel-Wärmeübertrager 154 und das Befestigungsprofil 159 an das Verteilelement 5 zu montieren. Die Kupplungsvorrichtung kann, wie bereits erwähnt, in nicht dargestellten Ausführungsformen auch als berührungslose Kupplungsvorrichtung ausgebildet sein.

In den vorangehenden Beispielen sind die Zugänge und Abläufe auf der Oberseite bzw. Unterseite der Verteilelemente angeordnet. Selbstverständlich können diese aber auch zumindest teilweise auf den Stirnseiten der Verteilelemente 3,5 angeordnet sein.

### Bezugszeichenliste

- 1: Modul
- 3,5: Verteilelement
- 7,9, 11, 13: Ventil
- 15, 17: Pumpe
- 19,21: Sensor
- 23,25,27,29,31,33: Zulauf
- 35, 37, 39, 41, 43, 45: Abgang
- 47, 49, 51: Kanal
- 47a, 47b, 49a, 49b, 51a, 51b: Kanalhalbschale
- 54: Kältemittel-Kühlmittel-Wärmeübertrager
- 53, 55, 57, 59: Durchbrechung
- 61, 63, 65, 67: Ventilkammer
- 69, 71, 73, 75: Ventilglied
- 77, 79: Rotor
- 81,83: Durchbrechung
- 85, 87: Pumpkammer
- 89,91: Durchbrechung
- 93,95: Sensierkammer
- 97: Hilfselement
- 99: Aktuator
- 101, 103: Dichtungselement
- 105: Verbindungselement
- 107, 109, 111: Abdeckung
- 113: Pumpe
- 115: Teil
- 117: Welle
- 119: Kupplungsvorrichtung
- 121: Kupplungselement
- 123: Federelement
- 125: Kupplungselement
- 127: Teil
- 129: Rotor
- 131: Lager
- 133: Dichtung
- 135: Vertiefung
- 137: Schelle
- 139: Verschraubung
- 141: Lasche
- 143: Pumpengehäuse
- 145: Gehäusemantel
- 147, 149: Gehäusestirnwand
- 151: Anschlussstutzen
- 153: weibliches Kopplungsteil
- 155: männliches Kopplungsteil
- 157: Schlauch
- 159: Befestigungsprofil
- 161: Verrastungsteil
- A: Richtung

## Patentansprüche

1. Thermomanagementmodul (1) zur Handhabung zumindest eines Fluids innerhalb eines Fahrzeugs, insbesondere eines zumindest teilweise elektrisch angetriebenen Fahrzeugs, umfassend zumindest ein im wesentlichen plattenförmig ausgebildetes erstes Verteilelement (3) und zumindest ein zweites im Wesentlichen plattenförmig ausgebildetes und im Wesentlichen parallel zu dem ersten Verteilelement (3) angeordnetes Verteilelement (5), wobei das erste Verteilelement (3) und/oder das zweite Verteilelement (5) zumindest bereichsweise eine Vielzahl von Fluidhandhabungselementen (7, 9, 11, 13, 15, 17, 19, 21, 23, 25, 27, 29, 31, 33, 35, 37, 39, 41, 43, 45, 47, 49, 51, 54) umfasst bzw. umfassen und wobei das erste Verteilelement (3) und das zweite Verteilelement (5) zumindest bereichsweise Kunststoff umfassen, wobei eines der Fluidhandhabungselemente (7, 9, 11, 13, 15, 17, 19, 21, 23, 25, 27, 29, 31, 33, 35, 37, 39, 41, 43, 45, 47, 49, 51, 54) als Kältemittel-Kühlmittel-Wärmeübertrager (54) ausgebildet ist, wobei der Kältemittel-Kühlmittel-Wärmeübertrager (54) mittels eines im Wesentlichen U-förmigen Profils aus Kunststoff an einem der Verteilelemente (3, 5) formschlüssig, wie durch Verrasten, oder stoffschlüssig, wie durch Verkleben oder Verschweißen, befestigt ist.

2. Thermomanagementmodul (1) nach Anspruch 1,
**dadurch gekennzeichnet, dass**
das Thermomanagementmodul (1) zumindest ein, vorzugsweise eine Vielzahl, von dritten Verteilelementen umfasst, wobei das bzw. die dritten Verteilelemente insbesondere parallel zu dem ersten Verteilelement (3) und/oder dem zweiten Verteilelement (5) angeordnet ist bzw. sind und/oder zumindest eines der Fluidhandhabungselemente (7, 9, 11, 13, 15, 17, 19, 21, 23, 25, 27, 29, 31, 33, 35, 37, 39, 41, 43, 45, 47, 49, 51, 54) umfasst bzw. umfassen.

3. Thermomanagementmodul (1) nach einem der vorangehenden Ansprüche,
**dadurch gekennzeichnet, dass**
r zumindest eines der Fluidhandhabungselemente zumindest eine Durchbrechung (53, 55, 57, 59, 81, 83, 89, 91), zumindest einen Anschlussstutzen, insbesondere in Form zumindest eines Zulaufs (23, 25, 27, 29, 31, 33) und/oder zumindest eines Abgangs (35, 37,39,41,43,45), zumindest ein Ventil (7, 9, 11, 13), zumindest eine Pumpe (15, 17), zumindest einen Kanal (47, 49, 51), zumindest einen Sensor (19, 21) und/oder zumindest ein Dichtungselement umfasst, wobei insbesondere der Anschlussstutzen eine Kopplungseinrichtung, wie ein weibliches oder männliches Kopplungsteil, aufweist, die dazu ausgebildet ist, mit einer entsprechenden Kopplungseinrichtung, wie einem männlichen oder weiblichen Kopplungsteil, eines zu koppelnden Fluidhandhabungselements in einen Eingriff zu gelangen, wobei die Kopplungseinrichtung des Anschlussstutzens eine vorbestimmte Montagerichtung und/oder Orientierung festlegt, in welcher das Fluidhandhabungselement anschließbar ist, wobei insbesondere die Kopplungsteile von Anschlussstutzen und Fluidhandhabungselement vorzugsweise nur in der vorbestimmten Montagerichtung und/oder Orientierung zueinander miteinander in Eingriff bringbar sind, wobei r zumindest eines der Fluidhandhabungselemente (53, 55, 57, 59, 81, 83, 89, 91) vollständig von dem ersten Verteilelement (3), dem zweiten Verteilelement und/oder dem dritten Verteilelement umfasst ist, zumindest ein Teil zumindest eines der Fluidhandhabungselemente integral, vorzugsweise als 2K-Komponente in dem ersten Verteilelement, dem zweiten Verteilelement und/oder dem dritten Verteilelement ausgebildet ist, insbesondere in Form zumindest einer Vertiefung und/oder zumindest einer Kammer, wie zumindest einer Ventilkammer (61, 63,65,67), zumindest einer Pumpkammer (85, 87), zumindest eines Kanalsegments, wie einer Kanalteilschale, insbesondere Kanalhalbschale (47a, 47b, 49a, 49b, 51a, 51b), zumindest einer Sensierkammer (93, 95) und/oder zumindest einer Probenkammer, oder das Fluidhandhabungselement (7, 9, 11, 13, 15, 17, 19, 21) zumindest ein mit dem ersten Verteilelement (3), dem zweiten Verteilelement (5) und/oder dem dritten Verteilelement in Verbindung bringbares, insbesondere zumindest bereichsweise in der Vertiefung und/oder der Kammer aufnehmbares und/oder anordbares Hilfselement (97, 113), wie einen Ventilaktuator (99), einen Pumpaktuator, ein Ventilglied (69, 71,73, 75), ein Pumpelement (77, 79, 129), einen Sensor (19, 21), wie einen Temperatursensor, einen pH-Sensor, einen Drucksensor und/oder Strömungssensor umfasst.

4. Thermomanagementmodul (1) nach Anspruch 3,
**dadurch gekennzeichnet, dass**
zumindest ein Bereich des Hilfselements (113) akustisch entkoppelt und/oder akustisch gedämpft von dem ersten Verteilelement (3), dem zweiten Verteilelement (5) und/oder dem dritten Verteilelement ist, vorzugsweise unter Zwischenschaltung zumindest eines akustischen ersten Dämpfungselements an dem ersten Verteilelement (3), dem zweiten Verteilelement (5) und/oder dem dritten Verteilelement gelagert ist, wobei insbesondere das Hilfselement (113) zumindest bereichsweise zweiteilig aufgebaut ist, wobei insbesondere der erste Teil (127) akustisch entkoppelt und/oder akustisch gedämpft von dem ersten Verteilelement (3), dem zweiten Verteilelement (5) und/oder dem dritten Verteilelement gelagert ist, während vorzugsweise der zweite Teil (115) zumindest indirekt akustisch ungedämpft mit dem ersten Verteilelement (3), dem zweiten Verteilelement (5) und/oder dem dritten Verteilelement verbunden ist, und/oder wobei der erste Teil (127) zumindest einen Antrieb, zumindest einen Aktuator und/oder zumindest eine Auswerteeinheit und/oder Wandlereinheit eines Sensors, insbesondere zur Umwandlung eines mittels einer Sensiereinheit des Sensors erfassten Sensiersignals in ein von dem Sensor ausgegebenes Messsignal, umfasst.

5. Thermomanagementmodul (1) nach Anspruch 4,
**dadurch gekennzeichnet, dass**
der zweite Teil (115) zumindest ein, vorzugsweise durch den ersten Teil (127), insbesondere den Antrieb und/oder den Aktuator , angetriebenes Glied, wie ein Pumpglied (129), ein Ventilglied und/oder zumindest eine mit der Auswerteeinheit und/oder Wandlereinheit wechselwirkende Sensiereinheit des Sensors, umfasst, wobei insbesondere mittels zumindest einer Kupplungsvorrichtung (119) eine Kraft, vorzugsweise eine translatorische Kraft und/oder ein Drehmoment, von zumindest einem Bereich des ersten Teils (127) auf zumindest einen Bereich des zweiten Teils (115) und/oder zumindest teilweise das Sensiersignal übertragbar ist, insbesondere mittels elektromagnetischer, magnetischer, elastisch mechanischer, direkter mechanischer, indirekter und/oder optischer Kopplung.

6. Thermomanagementmodul (1) nach Anspruch 5,
**dadurch gekennzeichnet, dass**
die Kupplungsvorrichtung (119) zumindest einen Magneten und/oder zumindest ein zweites Dämpfungselement (123) umfasst und/oder die Kupplungsvorrichtung zumindest bereichsweise durchlässig für das von der Vorrichtung gehandhabte Fluid ist, insbesondere zur Leitung des Fluids von dem zweiten Teil zu dem ersten Teil oder von dem ersten Teil zu dem zweiten Teil, beispielsweise zur Erwärmung und/oder Kühlung des ersten Teils, ausgebildet ist, beispielsweise zumindest bereichsweise eine Hohlwelle und/oder Fluidleitung umfasst und/oder als Hohlwelle ausgebildet ist, und/oder wobei das erste Dämpfungselement und/oder das zweite Dämpfungselement zumindest ein elastisches Element, wie ein Federelement (123) und/oder ein Gummielement umfasst.

7. Thermomanagementmodul (1) nach Anspruch 6,
**dadurch gekennzeichnet, dass**
zumindest ein Fluidhandhabungselement, vorzugsweise zumindest ein Kanal (47, 49, 51), zumindest eine Ventilkammer, zumindest eine Pumpkammer zumindest teilweise durch eine Kombination des ersten Verteilelementes (3) und des zweiten Verteilelementes (5), des zweiten Verteilelementes und des dritten Verteilelementes, des ersten Verteilelementes und des dritten Verteilelementes und/oder eines ersten dritten Verteilelementes und eines zweiten dritten Verteilelementes gebildet ist.

8. Thermomanagementmodul (1) nach einem der vorangehenden Ansprüche,
**dadurch gekennzeichnet, dass**
das erste Verteilelement (3) und das zweite Verteilelement (5), das erste Verteilelement und das dritte Verteilelement, das zweite Verteilelement und das dritte Verteilelement und/oder zumindest zwei dritte Verteilelemente mittels zumindest einer ersten Verbindungsvorrichtung, vorzugsweise nicht zerstörungsfrei lösbar, miteinander verbunden sind.

9. Thermomanagementmodul (1) nach einem der vorangehenden Ansprüche,
**dadurch gekennzeichnet, dass**
zumindest ein Hilfselement (97, 113) zumindest bereichsweise mittels zumindest einer zweiten Verbindungseinrichtung mit dem ersten Verteilelement (3), dem zweiten Verteilelement (5) und/oder dem dritten Verteilelement verbunden ist.

10. Thermomanagementmodul (1) nach Anspruch 9,
**dadurch gekennzeichnet, dass**
die erste Verbindungseinrichtung und/oder die zweite Verbindungseinrichtung zumindest eine Schweißverbindung, zumindest eine Adhäsionsverbindung, zumindest eine Schraubverbindung, zumindest einer Rastverbindung und/oder zumindest einer Klipsverbindung umfasst bzw. umfassen, wobei insbesondere mittels einer ersten zweiten Verbindungsvorrichtung der erste Teil (127) des Hilfsmittels (113) verbunden ist und mittels zumindest einer zweiten Verbindungsvorrichtung zumindest der zweite Teil (115) des Hilfsmittels (113) verbunden ist und/oder die erste zweite Verbindungsvorrichtung zumindest bereichsweise das erste Dämpfungselement umfasst.

11. Thermomanagementmodul (1) nach einem der vorangehenden Ansprüche,
**dadurch gekennzeichnet, dass**
das erste Verteilelement (3), das zweite Verteilelement (5) und/oder das dritte Verteilelement zumindest bereichsweise ein thermoplastisches Material, ein duroplastisches Material, ein Verbundmaterial, vorzugsweise thermoplastisches und duroplastisches Verbundmaterial, zumindest ein Polypropylenmaterial und/oder zumindest ein Polyamidmaterial umfasst und/oder wobei das Fluid zumindest ein Liquid, wie eine Kühlflüssigkeit, insbesondere umfassend Wasser, beispielweise destilliertes Wasser, umfasst.

12. Verfahren zur Herstellung eines Thermomanagementmoduls (1) zur Handhabung zumindest eines Fluids, insbesondere eines Thermomanagementmoduls (1) nach einem der vorangehenden Ansprüche, umfassend die Schritte
Bereitstellung zumindest eines ersten, im wesentlichen plattenförmigen Verteilelementes (3)
Bereitstellung zumindest eines zweiten, im wesentlichen plattenförmigen Verteilelementes (5)
Verbindung des ersten Verteilelementes (3) mit dem zweiten Verteilelement (5) mittels zumindest einer ersten Verbindungseinrichtung,
Bereitstellung eines Kältemittel-Kühlmittel-Wärmeübertragers (54), wobei der Kältemittel-Kühlmittel-Wärmeübertrager (54) mittels eines im Wesentlichen U-förmigen Profils aus Kunststoff an einem der Verteilelemente (3, 5) formschlüssig, wie durch Verrasten, oder stoffschlüssig, wie durch Verkleben oder Verschweißen, befestigt wird.

13. Verfahren nach Anspruch 12,
**dadurch gekennzeichnet, dass**
das Verfahren ferner die Bereitstellung zumindest eines dritten, im wesentlichen plattenförmigen Verteilelementes, vorzugsweise einer Vielzahl von dritten Verteilelementen umfasst, wobei vorzugsweise zumindest ein drittes Verteilelement mittels der ersten Verbindungseinrichtung mit dem ersten Verteilelement, dem zweiten Verteilelement und/oder zumindest einem weiteren dritten Verteilelement verbunden wird, wobei insbesondere der Schritt der Bereitstellung des ersten Verteilelementes (3), der Schritt der Bereitstellung des zweiten Verteilelementes (5) und/oder der Schritt der Bereitstellung des dritten Verteilelementes die Herstellung des ersten, zweiten und/oder dritten Verteilelementes (3, 5) in zumindest einem Auf-/Zu Werkzeug umfasst, insbesondere mittels Spritzgießen.

14. Verfahren nach einem der Ansprüche 12 bis 13,
**dadurch gekennzeichnet, dass**
der Schritt der Bereitstellung des ersten Verteilelementes (3), der Schritt der Bereitstellung des zweiten Verteilelementes (5) und/oder der Schritt der Bereitstellung des dritten Verteilelementes die zumindest teilweise Ausbildung zumindest eines Fluidhandhabungselementes (7, 9, 11, 13, 15, 17, 19, 21, 23, 25, 27, 29, 31, 33, 35, 37, 39, 41, 43, 45, 47, 49, 51) in dem ersten, zweiten und/oder dritten Verteilelement (3, 5), insbesondere in einem 2K-Verfahren umfasst.

## Claims

1. A thermal management module (1) for handling at least one fluid within a vehicle, in particular an at least semi-electrically driven vehicle, comprising at least one substantially plate-shaped first distributor element (3) and at least one second substantially plate-shaped distributor element (5) arranged substantially parallel to the first distributor element (3), wherein the first distributor element (3) and/or the second distributor element (5) at least regionally comprise(s) a plurality of fluid handling elements (7, 9, 11, 13, 15, 17, 19, 21, 23, 25, 27, 29, 31, 33, 35, 37, 39, 41, 43, 45, 47, 49, 51, 54), and wherein the first distributor element (3) and the second distributor element (5) at least regionally comprise plastic, wherein one of the fluid handling elements (7, 9, 11, 13, 15, 17, 19, 21, 23, 25, 27, 29, 31, 33, 35, 37, 39, 41, 43, 45, 47, 49, 51, 54) is configured as a refrigerant/coolant heat exchanger (54), wherein the refrigerant/coolant heat exchanger (54) is attached by means of a substantially U-shaped profile consisting of plastic to one of the distributor elements (3, 5) in a positive-locking manner, such as by snapping, or in a material-locking manner, such as by gluing or welding.

2. The thermal management module (1) according to claim 1,
**characterised in that**
the thermal management module (1) comprises at least one, and preferably a plurality of, third distributor element(s), wherein the third distributor element(s) is/are arranged in particular parallel to the first distributor element (3) and/or the second distributor element (5) and/or comprise (s) at least one of the fluid handling elements (7, 9, 11, 13, 15, 17, 19, 21,23, 25, 27, 29, 31, 33, 35, 37, 39, 41,43, 45, 47, 49, 51, 54).

3. The thermal management module (1) according to any one of the preceding claims, **characterised in that**
at least one of the fluid handling elements comprises at least one perforation (53, 55, 57, 59, 81, 83, 89, 91), at least one connector fitting, in particular in the form of at least one inlet (23, 25, 27, 29, 31, 33) and/or at least one outlet (35, 37, 39, 41, 43, 45), at least one valve (7, 9, 11, 13), at least one pump (15, 17), at least one channel (47, 49, 51), at least one sensor (19, 21), and/or at least one sealing element, wherein in particular the connector fitting comprises a coupling means, such as a female or male coupling part, which is configured so as to bring a fluid handling element to be coupled into engagement with a corresponding coupling means, such as a male or female coupling part, wherein the coupling means of the connector fitting defines a predetermined mounting direction and/or orientation, in which the fluid handling element is connectable, wherein in particular the coupling parts of the connection fitting and the fluid handling element are preferably only engageable with one another in the predetermined assembly direction and/or orientation, wherein at least one of the fluid handling elements (53, 55, 57, 59, 81, 83, 89, 91) is completely encompassed by the first distributor element (3), the second distributor element, and/or the third distributor element, [wherein] at least a portion of at least one of the fluid handling elements is integrally configured in the first distributor element, the second distributor element, and/or the third distributor element, preferably as a dual component and in particular in the form of at least one recess and/or at least one chamber, such as at least one valve chamber (61, 63, 65, 67), at least one pumping chamber (85, 87), at least one channel segment, such as a channel semi-shell, in particular a channel half-shell (47a, 47b, 49a, 49b, 51a, 51b), at least one sensing chamber (93, 95), and/or at least one sampling chamber, or the fluid handling element (7, 9, 11, 13, 15, 17, 19, 21) comprises at least one auxiliary element (97, 113) which can be connected to the first distributor element (3), the second distributor element (5), and/or the third distributor element, being in particular at least regionally receivable or arrangeable in the recess and/or in the chamber, such as a valve actuator (99), a pump actuator, a valve member (69, 71, 73, 75), a pump element (77, 79, 129), a sensor (19, 21), such as a temperature sensor, a pH sensor, a pressure sensor, and/or flow sensor.

4. The thermal management module (1) according to claim 3,
**characterised in that**
at least one region of the auxiliary element (113) is mounted so as to be acoustically decoupled and/or acoustically damped from the first distributor element (3), the second distributor element (5), and/or the third distributor element, preferably with the interposition of at least one acoustic first damping element on the first distributor element (3), the second distributor element (5), and/or the third distributor element, wherein
in particular, the auxiliary element (113) is at least regionally constructed in two parts, wherein in particular the first part (127) is mounted so as to be acoustically decoupled and/or acoustically damped from the first distributor element (3), the second distributor element (5), and/or the third distributor element, while preferably the second part (115) is connected to the first distributor element (3), the second distributor element (5), and/or the third distributor element in an at least indirectly acoustically undamped manner, and/or wherein the first part (127) comprises at least one drive, at least one actuator, and/or at least one evaluation unit and/or converter unit of a sensor, in particular for converting a sensor signal sensed by a sensor unit of the sensor into a measurement signal output by the sensor.

5. The thermal management module (1) according to claim 4,
**characterised in that**
the second part (115) comprises at least one member that is preferably driven by the first part (127), in particular the drive and/or the actuator, such as a pump link (129), a valve member, and/or at least one sensing unit of the sensor that interacts with the evaluation unit and/or the converter unit, wherein, in particular by means of at least one coupling device (119), a force, preferably a translational force and/or a torque, and/or at least partially the sensor signal, can be transferred from at least one region of the first part (127) to at least one region of the second part (115), in particular by means of electromagnetic, magnetic, elastically mechanical, directly mechanical, indirect and/or optical coupling.

6. The thermal management module (1) according to claim 5,
**characterised in that**
the coupling device (119) comprises at least one magnet and/or at least one second damping element (123) and/or the coupling device is designed so as to be at least regionally permeable to the fluid handled by the device, in particular for directing the fluid from the second part to the first part or from the first part to the second part, for example for heating and/or cooling the first part, for example at least regionally being comprised as a hollow shaft and/or fluid conduit and/or configured as a hollow shaft, and/or wherein the first damping element and/or the second damping element comprises at least one elastic element, such as a spring element (123) and/or a rubber element.

7. The thermal management module (1) according to claim 6,
**characterised in that**
at least one fluid handling element, preferably at least one channel (47, 49, 51), at least one valve chamber, [or] at least one pump chamber, is formed at least partially by a combination of the first distributor element (3) and the second distributor element (5), the second distributor element and the third distributor element, the first distributor element and the third distributor element, and/or a first third distributor element and a second third distributor element.

8. The thermal management module (1) according to any one of the preceding claims,
**characterised in that**
the first distributor element (3) and the second distributor element (5), the first distributor element and the third distributor element, the second distributor element and the third distributor element, and/or at least two third distributor elements are connected to each other by means of at least one first connecting device, preferably in a non-destructively releasable manner.

9. The thermal management module (1) according to any one of the preceding claims,
**characterised in that**
at least one auxiliary element (97, 113) is connected at least regionally to the first distributor element (3), the second distributor element (5), and/or the third distributor element by means of at least one second connecting device.

10. The thermal management module (1) according to claim 9, **characterised in that**
the first connecting device and/or the second connecting device comprise(s) at least one weld connection, at least one adhesion connection, at least one bolted connection, at least one snap connection, and/or at least one clip connection, wherein, in particular, the first part (127) of the auxiliary element (113) is connected by means of a first second connecting device and at least the second part (115) of the auxiliary element (113) by means of at least one second connecting device, and/or the first second connecting device comprises at least regionally the first damping element.

11. The thermal management module (1) according to any one of the preceding claims, **characterised in that**
the first distributor element (3), the second distributor element (5), and/or the third distributor element comprise at least regionally a thermoplastic material, a thermosetting material, a composite material, preferably thermoplastic and thermosetting composite, at least one polypropylene material, and/or at least one polyamide material, and/or wherein the fluid comprises at least one liquid, such as a cooling liquid, in particular comprising water, for example distilled water.

12. A method for manufacturing a thermal management module (1) for handling at least one fluid, in particular a thermal management module (1) according to any one of the preceding claims, comprising the steps of providing at least one first, substantially plate-shaped distributor element (3) providing at least one second, substantially plate-shaped distributor element (5); connecting the first distributor element (3) to the second distributor element (5) by means of at least one first connecting device; providing a refrigerant/coolant heat exchanger (54), wherein the refrigerant/coolant heat exchanger (54) is attached by means of a substantially U-shaped profile consisting of plastic to one of the distributor elements (3, 5) in a positive-locking manner, such as by snapping, or in a material-locking manner, such as by gluing or welding.

13. The method according to claim 12,
**characterised in that**
the method further comprises providing at least one third, substantially plate-like distributor element, preferably comprising a plurality of third distributor elements, wherein preferably at least one third distributor element is connected by means of the first connecting device to the first distributor element, the second distributor element, and/or at least one further third distributor element, wherein, in particular, the step of providing the first distributor element (3), the step of providing the second distributor element (5), and/or the step of providing the third distributor element comprises the manufacturing of the first, second, and/or third distributor element (3, 5) in at least one open/closed tool, in particular by means of injection moulding.

14. The method according to any one of claims 12 to 13,
**characterised in that**
the step of providing the first distributor element (3), the step of providing the second distributor element (5), and/or the step of providing the third distributor element comprises at least regional formation of at least one fluid handling element (7, 9, 11, 13, 15, 17, 19, 21, 23, 25, 27, 29, 31, 33, 35, 37, 39, 41, 43, 45, 47, 49, 51) in the first, second, and/or third distributor element (3, 5), in particular in a dual component method.

## Revendications

1. Module de gestion thermique (1) pour la manipulation d'au moins un fluide à l'intérieur d'un véhicule, en particulier d'un véhicule à entraînement au moins partiellement électrique, comprenant au moins un premier élément de répartition (3) formé essentiellement en forme de plaque et au moins un deuxième élément de répartition (5) formé essentiellement en forme de plaque et agencé essentiellement en parallèle avec le premier élément de répartition (3), dans lequel le premier élément de répartition (3) et/ou le deuxième élément de répartition (5) comprend ou comprennent au moins par zone une pluralité d'éléments de manipulation de fluide (7, 9, 11, 13, 15, 17, 19, 21, 23, 25, 27, 29, 31, 33, 35, 37, 39, 41, 43, 45, 47, 49, 51, 54) et dans lequel premier élément de répartition (3) et le deuxième élément de répartition (5) comprennent au moins par zone du plastique, dans lequel l'un des éléments de manipulation de fluide (7, 9, 11, 13, 15, 17, 19, 21, 23, 25, 27, 29, 31, 33, 35, 37, 39, 41, 43, 45, 47, 49, 51, 54) est formé comme un échangeur de chaleur fluide frigorigène-fluide de refroidissement (54), dans lequel l'échangeur de chaleur fluide frigorigène-fluide de refroidissement (54) est fixé par le biais d'un profilé en plastique essentiellement en forme de U sur l'un des éléments de répartition (3, 5) par complémentarité de forme, comme par encliquetage, ou par complémentarité de matière, comme par collage ou soudage.

2. Module de gestion thermique (1) selon la revendication 1,
**caractérisé en ce que**
le module de gestion thermique (1) comprend au moins un, de préférence une pluralité de troisièmes éléments de répartition, dans lequel le ou les troisièmes éléments de répartition est ou sont agencés en particulier parallèlement au premier élément de répartition (3) et/ou au deuxième élément de répartition (5) et/ou comprend ou comprennent au moins l'un des éléments de manipulation de fluide (7, 9, 11, 13, 15, 17, 19, 21, 23, 25, 27, 29, 31, 33, 35, 37, 39, 41, 43, 45, 47, 49, 51, 54).

3. Module de gestion thermique (1) selon l'une des revendications précédentes, **caractérisé en ce que**
au moins l'un des éléments de manipulation de fluide comprend au moins une traversée (53, 55, 57, 59, 81, 83, 89, 91), au moins un manchon de raccordement, en particulier sous forme d'au moins un accès (23, 25, 27, 29, 31, 33) et/ou au moins une sortie (35, 37, 39, 41, 43, 45), au moins une soupape (7, 9, 11, 13), au moins une pompe (15, 17), au moins un canal (47, 49, 51), au moins un capteur (19, 21) et/ou au moins un élément d'étanchéité, dans lequel en particulier le manchon de raccordement présente un dispositif d'accouplement, comme une pièce d'accouplement femelle ou mâle, qui est conçu pour venir en prise avec un dispositif d'accouplement correspondant, comme une pièce d'accouplement mâle ou femelle, d'un élément de manipulation de fluide à accoupler, dans lequel le dispositif d'accouplement du manchon de raccordement établit une direction de montage et/ou une orientation prédéterminée(s), dans laquelle l'élément de manipulation de fluide peut être raccordé, dans lequel en particulier les pièces d'accouplement du manchon de raccordement et de l'élément de manipulation de fluide peuvent venir en prise l'un avec l'autre de préférence uniquement dans la direction de montage et/ou l'orientation prédéterminée(s), dans lequel au moins l'un des éléments de manipulation de fluide (53, 55, 57, 59, 81, 83, 89, 91) est composé entièrement par le premier élément de répartition (3), le deuxième élément de répartition et/ou le troisième élément de répartition, au moins une pièce d'au moins un des éléments de manipulation de fluide est formée intégralement, de préférence en guise de composants 2K dans le premier élément de répartition, le deuxième élément de répartition et/ou le troisième élément de répartition, en particulier sous la forme d'au moins un évidement et/ou d'au moins une chambre, comme au moins une chambre de soupape (61, 63, 65, 67), au moins une chambre de pompe (85, 87), au moins un segment de canal, comme une coque partielle de canal, en particulier une demi-coque de canal (47a, 47b, 49a, 49b, 51a, 51b), au moins une chambre de détection (93, 95) et/ou au moins une chambre de sonde, ou l'élément de manipulation de fluide (7, 9, 11, 13, 15, 17, 19, 21) comprend au moins un élément auxiliaire (97, 113), comme un actionneur de soupape (99), un actionneur de pompe, un organe de soupape (69, 71, 73, 75), un élément de pompe (77, 79, 129), un capteur (19, 21), comme un capteur de température, un capteur de pH, un capteur de pression et/ou un capteur d'écoulement, l'élément auxiliaire pouvant être mis en liaison avec le premier élément de répartition (3), le deuxième élément de répartition (5) et/ou le troisième élément de répartition, en particulier pouvant être agencé et/ou reçu au moins par zone dans l'évidement et/ou la chambre.

4. Module de gestion thermique (1) selon la revendication 3,
**caractérisé en ce que**
au moins une zone de l'élément auxiliaire (113) est découplée acoustiquement et/ou atténuée acoustiquement par le premier élément de répartition (3), le deuxième élément de répartition (5) et/ou le troisième élément de répartition, de préférence est monté avec l'interposition d'au moins un premier élément d'atténuation acoustique sur le premier élément de répartition (3), le deuxième élément de répartition (5) et/ou le troisième élément de répartition, dans lequel
en particulier l'élément auxiliaire (113) est construit en deux pièces au moins par zone, dans lequel en particulier la première pièce (127) est découplée acoustiquement et/ou atténuée acoustiquement par le premier élément de répartition (3), le deuxième élément de répartition (5) et/ou le troisième élément de répartition, tandis que de préférence la seconde pièce (115) est reliée sans être atténuée acoustiquement, au moins indirectement, avec le premier élément de répartition (3), le deuxième élément de répartition (5) et/ou le troisième élément de répartition, et/ou dans lequel la première pièce (127) comprend au moins un entraînement, au moins un actionneur et/ou au moins une unité d'évaluation et/ou unité de conversion d'un capteur, en particulier pour la conversion d'un signal de détection capturé par le biais d'une unité de détection du capteur en un signal de mesure émis par le capteur.

5. Module de gestion thermique (1) selon la revendication 4,
**caractérisé en ce que**
la seconde pièce (115) comprend au moins un organe, de préférence entraîné par la première pièce (127), en particulier l'entraînement et/ou l'actionneur, comme un organe de pompe (129), un organe de soupape et/ou au moins une unité de détection du capteur interagissant avec l'unité d'évaluation et/ou l'unité de conversion, dans lequel une force, de préférence une force de translation et/ou un couple et/ou au moins partiellement le signal de détection, peut être transféré en particulier par le biais d'au moins un dispositif d'accouplement (119), d'au moins une zone de la première pièce (127) sur au moins une zone de la seconde pièce (115), en particulier par le biais d'un accouplement électromagnétique, magnétique, mécanique élastique, mécanique direct, indirect et/ou optique.

6. Module de gestion thermique (1) selon la revendication 5,
**caractérisé en ce que**
le dispositif d'accouplement (119) comprend au moins un aimant et/ou au moins un second élément d'atténuation (123) et/ou le dispositif d'accouplement est formé au moins par zone perméable pour le fluide manipulé par le dispositif, en particulier pour la conduite du fluide de la seconde pièce à la première pièce ou de la première pièce à la seconde pièce, par exemple pour chauffer et/ou refroidir la première pièce, par exemple comprend au moins par zone un arbre à cavité et/ou une conduite de fluide et/ou est formé comme un arbre à cavité, et/ou dans lequel le premier élément d'atténuation et/ou le second élément d'atténuation comprend au moins un élément élastique, comme un élément de ressort (123) et/ou un élément de caoutchouc.

7. Module de gestion thermique (1) selon la revendication 6,
**caractérisé en ce que**
au moins un élément de manipulation de fluide, de préférence au moins un canal (47, 49, 51), au moins une chambre de soupape, au moins une chambre de pompe, est formé au moins partiellement par une combinaison du premier élément de répartition (3) et du deuxième élément de répartition (5), du deuxième élément de répartition et du troisième élément de répartition, du premier élément de répartition et du troisième élément de répartition et/ou d'un premier troisième élément de répartition et d'un second troisième élément de répartition.

8. Module de gestion thermique (1) selon l'une des revendications précédentes,
**caractérisé en ce que**
le premier élément de répartition (3) et le deuxième élément de répartition (5), le premier élément de répartition et le troisième élément de répartition, le deuxième élément de répartition et le troisième élément de répartition et/ou au moins deux troisièmes éléments de répartition sont reliés l'un à l'autre par le biais d'au moins un premier dispositif de liaison, de préférence de manière non amovible sans destruction.

9. Module de gestion thermique (1) selon l'une des revendications précédentes,
**caractérisé en ce que**
au moins un élément auxiliaire (97, 113) est relié au moins par zone par le biais d'au moins un second dispositif de liaison au premier élément de répartition (3), au deuxième élément de répartition (5) et/ou au troisième élément de répartition.

10. Module de gestion thermique (1) selon la revendication 9, **caractérisé en ce que**
le premier dispositif de liaison et/ou le second dispositif de liaison comprend ou comprennent au moins une liaison par soudage, au moins une liaison par adhérence, au moins une liaison par vissage, au moins une liaison par encliquetage et/ou au moins une liaison par enclenchement, dans lequel en particulier, la première pièce (127) du moyen auxiliaire (113) est reliée par le biais d'un premier second dispositif de liaison et la seconde pièce (115) du moyen auxiliaire (113) est reliée par le biais d'au moins un second dispositif de liaison et/ou le premier second dispositif de liaison comprend au moins par zone le premier élément d'atténuation.

11. Module de gestion thermique (1) selon l'une des revendications précédentes, **caractérisé en ce que**
le premier élément de répartition (3), le deuxième élément de répartition (5) et/ou le troisième élément de répartition comprennent au moins par zone un matériau thermoplastique, un matériau dupoplastique, un matériau composite, de préférence un matériau composite thermoplastique et duroplastique, au moins un matériau en polypropylène et/ou au moins un matériau en polyamide et/ou dans lequel le fluide comprend au moins un liquide, comme un liquide de refroidissement, en particulier de l'eau, par exemple de l'eau distillée.

12. Procédé de fabrication d'un module de gestion thermique (1) pour la manipulation d'au moins un fluide, en particulier d'un module de gestion thermique (1) selon l'une des revendications précédentes, comprenant les étapes de mise à disposition d'au moins un premier élément de répartition (3) essentiellement en forme de plaque, mise à disposition d'au moins un deuxième élément de répartition (5) au essentiellement en forme de plaque, liaison du premier élément de répartition (3) avec le deuxième élément de répartition (5) par le biais d'au moins un premier dispositif de liaison, mise à disposition d'un échangeur de chaleur fluide frigorigène-fluide de refroidissement (54), dans lequel l'échangeur de chaleur fluide frigorigène-fluide de refroidissement (54) est fixé par le biais d'un profilé en plastique essentiellement en forme de U à l'un des éléments de répartition (3, 5) par complémentarité de forme, comme par encliquetage, ou par complémentarité de matière, comme par collage ou soudage.

13. Procédé selon la revendication 12,
**caractérisé en ce que**
le procédé comprend en outre la mise à disposition d'au moins un troisième élément de répartition essentiellement en forme de plaque, de préférence d'une pluralité de troisièmes éléments de répartition, dans lequel de préférence au moins un troisième élément de répartition est relié par le biais du premier dispositif de liaison au premier élément de répartition, au deuxième élément de répartition et/ou à au moins un autre troisième élément de répartition, dans lequel en particulier l'étape de mise à disposition du premier élément de répartition (3), l'étape de mise à disposition du deuxième élément de répartition (5) et/ou l'étape de mise à disposition du troisième élément de répartition comprend la fabrication du premier, deuxième et/ou troisième élément de répartition (3, 5) dans au moins un outil d'ouverture/fermeture, en particulier par le biais d'un moulage par injection.

14. Procédé selon l'une des revendications 12 à 13,
**caractérisé en ce que**
l'étape de mise à disposition du premier élément de répartition (3), l'étape de mise à disposition du deuxième élément de répartition (5 et/ou l'étape de mise à disposition du troisième élément de répartition comprend la formation au moins partielle d'au moins un élément de manipulation de fluide (7, 9, 11, 13, 15, 17, 19, 21, 23, 25, 27, 29, 31, 33, 35, 37, 39, 41, 43, 45, 47, 49, 51) dans le premier, le deuxième et/ou le troisième élément de répartition (3, 5), en particulier dans un procédé 2K.
